# EUROPÄISCHE PATENTSCHRIFT

(11) **EP 1 533 569 B1**
(45) Veröffentlichungstag und Bekanntmachung des Hinweises auf die Patenterteilung: **17.02.2016**
(21) Anmeldenummer: 04105548.4
(22) Anmeldetag: 05.11.2004
(51) Int. Cl.: F23M 20/00

(54) **Verfahren zum Betrieb einer Feuerungseinrichtung**
Method for operating a furnace
Méthode de fonctionnement d'un appareil de combustion

(30) Priorität: 20.11.2003 EP 03104292; 19.12.2003 CH 21902003
(43) Veröffentlichungstag der Anmeldung: 25.05.2005
(73) Patentinhaber: ALSTOM Technology Ltd, 5400 Baden (CH)
(72) Erfinder: Garay, Mauricio, 5400, Baden (CH); Guhl, Ingmar, Willi, Erich, 5400, Baden (CH); Reiss, Frank, 79787, Lauchringen (DE)
(74) Vertreter: General Electric Technology GmbH

(56) Entgegenhaltungen:
- EP-A- 0 962 704
- EP-A- 1 180 646
- EP-A- 1 205 653
- WO-A-01/96785
- WO-A-02/061335
- DE-A- 19 934 612
- US-A- 3 388 862
- US-A- 5 533 329
- PATENT ABSTRACTS OF JAPAN Bd. 1996, Nr. 02, 29. Februar 1996 (1996-02-29) -& JP 07 260139 A (MITSUBISHI HEAVY IND LTD), 13. Oktober 1995 (1995-10-13)

## Beschreibung

### Technisches Gebiet

Die vorliegende Erfindung betrifft ein Verfahren zum Betrieb einer Feuerungseinrichtung gemäss dem Oberbegriff des Anspruchs 1.

### Stand der Technik

Feuerungseinrichtungen werden aufgrund der geforderten niedrigen Emissionen häufig mit Vormischbrennern betrieben, wie sie aus der EP 321 809, WO 01/96785, EP 780 629, WO 92/19913, WO 00/12936, oder WO93/17279 bekannt sind. Diese Brenner werden idealerweise mit einem mageren Brennstoff-Luftverhältnis betrieben. Die Betriebs-Luftzahl eines Brenners liegt typischerweise in einer Grössenordnung von 2, wobei nur vergleichsweise geringe Abweichungen von der Auslegungs-Luftzahl tolerabel sind: Bei einer Steigerung der Luftzahl neigt der Brenner zur Ausbildung von Verbrennungsinstabilitäten und schliesslich zum Verlöschen, während ein Betrieb mit fetterem Brennstoff-Luft-Gemisch zunehmend zu steigenden und unzulässigen Stickoxidemissionen und potenziell zu einer übermässigen thermischen Belastung der Brenner führt. Es resultiert ein vergleichsweise enges Betriebsfenster für das zulässige Brennstoff-Luftverhältnis.

Über dem Betriebsbereich einer Feuerungseinrichtung vermag die Gesamtluftzahl der Feuerungseinrichtung jedoch in einem viel grösseren Umfang zu variieren. Daher umfasst eine Feuerungseinrichtung typischerweise eine Mehrzahl von Brennern, welche entweder einzeln oder in Gruppen mit Brennstoff beaufschlagt werden können. Gemäss einer im Stand der Technik bekannten Ausführungsform sind Brenner oder Gruppen von Brennern mittels Absperrorganen selektiv mit Brennstoff zu beaufschlagen, oder von der Brennstoffzufuhr zu isolieren. Auf diese Weise wird ein steigender Brennstoffmassenstrom auf eine steigende Anzahl von Brennern verteilt, und umgekehrt wird die Anzahl der mit Brennstoff beaufschlagten Brenner bei sinkendem Gesamt-Massenstrom verkleinert, wodurch ein stabiler Betrieb der jeweils mit Brennstoff beaufschlagten Brenner gewährleistet wird. Entsprechend werden die Schaltpunkte für die einzelnen Brenner und/oder Brennergruppen als Funktion eines geeigneten Parameters festgelegt. Einerseits wäre es selbstverständlich möglich, den Brennstoffmassenstrom zu messen, was jedoch sehr sensitiv auf Veränderungen des Brennstoff-Heizwertes reagiert. Als Steuerungsparameter zur Festlegung der Brennerschaltpunkte wird insbesondere eine Feuerungstemperatur herangezogen. Wenn die Feuerungseinrichtung als Brennkammer einer Gasturbogruppe betrieben wird, werden die Schaltpunkte bevorzugt in Abhängigkeit von einer Leistungskenngrösse der Gasturbogruppe, insbesondere der Relativleistung, definiert als Ist-Leistung bezogen auf die Vollastleistung, festgelegt.

Ein weiteres Betriebskonzept, welches beispielsweise aus der DE 198 25 335 bekannt ist, sieht vor, einen Brenner oder eine Brennergruppe als Lastbrenner stabil zu betreiben. Ein weiterer Brenner oder eine weitere Brennergruppe wird als Nebenbrenner betrieben. Die Lastbrenner werden dabei mit einem Brennstoff-Luft-Gemisch betrieben, welches einen stabilen und pulsationsfreien Betrieb gewährleistet. Ein darüber hinausgehender Brennstoffmassenstrom wird zu den Nebenbrennern geleitet. Das Brennstoff-Luft-Gemisch dieser Brenner ist üblicherweise zu mager, um eine stabile Flamme zu gewährleisten; jedoch wird der Brennstoff in ein von den Lastbrennern erzeugtes sehr heisses Rauchgas eingeleitet und dort verbrannt. Die Lastbrenner selbst vermögen einen stabilen Betrieb aufrechtzuerhalten. Hierbei wird beispielsweise die Öffnung eines Brennstoffmassenstromn-Stellorgans für die Nebenbrenner in Abhängigkeit von einem der oben genannten Steuerungsparameter festgelegt.

Auch eine Kombination der Einzelbrennersteuerung und der Nebenbrennersteuerung in einer einzigen Feuerungseinrichtung ist bekannt; so sind Gasturbogruppen bekanntgeworden, bei denen im Teillastbereich eine erste Anzahl Brenner einzeln zugeschaltet wird, während nahe der Volllast ein kontinuierlich verstellbares Brennstoffmassenstrom-Stellorgan einer Nebenbrennergruppe gesteuert wird.

Aus der WO 01/96785 sind weiterhin Brenner bekanntgeworden, bei denen sich die Zuführung von Brennstoff intern, innerhalb eines Brenners, auf unterschiedliche Gruppen von Brennstoffaustrittsöffnungen verteilen lässt.

Es hat sich gezeigt, dass die zulässigen stabilen Betriebsbereiche für das Brennstoff-Luft-Verhältnis der Brenner von einer ganzen Reihe weiterer Einflussgrössen abhängig sind. Zu nennen sind unter anderem die Temperatur, die Feuchte, und der Druck der Verbrennungsluft, deren Geschwindigkeit und Strömungsfeld im Brenner, die Brennstoffzusammensetzung und die Brennstofftemperatur, wobei diese Aufzählung aufgrund der Komplexität des zugrundeliegenden Problems bei Weitem nicht abschliessend sein kann. Um dieser Variabilität gerecht zu werden, werden die Schaltpunkte der Brenner oder Brennergruppen, beziehungsweise die Öffnungsverläufe der Brennstoffmassenstrom-Stellorgane der Nebenbrenner üblicherweise so festgelegt, dass eine grosse Sicherheitsmarge gegen einen instabilen Betrieb vorhanden ist. Das heisst, die aktiven Brenner respektive die Lastbrenner werden mit einem fetteren Brennstoff-Luft-Gemisch betrieben, als dies zur Aufrechterhaltung eines sicheren Betriebes notwendig wäre. In der Druckschwingungsamplituden beobachtet werden, welche sich durch Veränderungen des Brennerbetriebes beeinflussen lassen.

Aus der US-A-5,533,329 ist eine Vorrichtung und ein Verfahren zur Steuerung einer Gasturbine bekannt, bei denen die Zufuhr der Verbrennungsluft und des Brennstoffs steuerbar ist und nach Massgabe eines Signals von einem Sensor für die Luftgeschwindigkeit bzw. den Luftstrom das Luft/Brennstoff-Verhältnis gesteuert wird.

Aus der EP-A1-1 180 646 ist eine dreistufige Brennkammer mit Magerverbrennung für eine Gasturbine bekannt, bei der die Stufen jeweils in zwei unabhängig versorgte Hälften aufgeteilt sind, die mit einem vorgegebenen Brennstoffmassenstrom versorgt werden, der dann zur Unterdrückung von Druckschwingungen auf die Hälften unterschiedlich aufgeteilt wird.

Aus der EP-A1-1 205 653 ist weiterhin ein Brennersystem mit gestufter Brennstoff-Eindüsung für eine Gasturbine bekannt, bei dem Pulsationen im Brennraum durch eine entsprechende Steuerung der gestuften Eindüsung minimiert werden.

Aus der WO-A1-02/061335 ist schliesslich ein Verfahren zur Herstellung einer Brenneranlage bekannt, bei dem eine gewünschte Massenstromverteilung mittels eines bestimmten Algorithmus ermittelt wird.

### Darstellung der Erfindung

Hier will die Erfindung Abhilfe schaffen. Der in den Ansprüchen gekennzeichneten Erfindung liegt die Aufgabe zugrunde, ein Verfahren der eingangs genannten Art anzugeben, welches die Nachteile des Standes der

Technik zu vermeiden vermag. Es soll ein Verfahren angegeben werden, mit dem allgemein Bereiche hoher Verbrennungs-Druckschwingungsamplituden vermieden werden. Gemäss einer Ausführungsform der Erfindung soll ein Verfahren angegeben werden, mit dem einerseits ein möglichst schadstoffarmer Betrieb gewährleistet wird, und andererseits eine möglichst geringe, aber ausreichende Sicherheit gegen einen instabilen Betrieb von Brennern gewährleistet wird.

Erfindungsgemäss wird diese Aufgabe unter Verwendung der Gesamtheit der Merkmale des Anspruchs 1 gelöst.

Kern der Erfindung ist es also, in Abhängigkeit von gemessenen Verbrennungs-Druckschwingungen die Aufteilung eines Gesamt-Brennstoffmassenstroms auf unterschiedliche Gruppen von Brennstoffaustrittsöffnungen zu variieren. Die unterschiedlichen Gruppen von Brennstoffaustrittsöffnungen sind gemäss einem Aspekt der Erfindung innerhalb eines Brenners angeordnet, derart, dass die Brennstoffverteilung und damit die Stöchiometrieverteilung innerhalb des Strömungsfeldes eines Brenners verändert wird. Gemäss einem anderen Aspekt der Erfindung wird die Aufteilung des Brennstoffmassenstroms auf unterschiedliche Brenner, respektive die Aufteilung auf die Brennstoffaustrittsöffnungen unterschiedlicher Brenner, variiert. Damit wird die lokale Temperaturverteilung innerhalb eines Brennraumes, oder anders ausgedrückt die räumliche Verteilung der thermischen Energieumsetzung, nachhaltig beeinflusst.

Zu einem Aspekt der Erfindung zählt, Brennraumdruckschwingungen, namentlich im Frequenzbereich von einigen Hertz bis zu einigen 100 Hertz oder einigen Kilohertz, also im akustischen Bereich und im Subschallbereich, sogenannte Verbrennungspulsationen, zu messen, und auf geeignete Weise eine Druckschwingungskenngrösse zu bilden.
Gemäss einem Aspekt der Erfindung wird eine Druckschwingungskenngrösse so gebildet, dass sie eine Aussage über die Stabilität der Verbrennung erlaubt. Es hat sich gezeigt, dass sich ein instabiler Betrieb aufgrund zu geringer Brennstoff-Luft-Verhältnisse vor allem in einem Anstieg der Druckamplituden in einem niederfrequenten Frequenzbereich manifestiert. Bevorzugt werden zur Bildung der Druckschwingungskenngrösse die Druckschwingungen bei Frequenzen unter 100 Hz, insbesondere unter 50 Hz, herangezogen, wobei in einer Ausführungsform die Druckschwingungen in einem Frequenzbereich von 5 Hz bis 40 Hz, oder auch 8 Hz bis 35 Hz ausgewertet werden. Wenn ein Überschreiten eines Grenzwertes der Druckschwingungskenngrösse beobachtet wird, wird dies als Zeichen für eine aufkommende Instabilität der Lastbrenner oder der in Betrieb befindlichen Brenner gewertet, und es wird entsprechend die Brennstoffzufuhr zu den Nebenbrennern gedrosselt, oder es wird ein Brenner oder eine Brennergruppe ausser Betrieb genommen. In der Folge werden die Lastbrenner oder die im Betrieb verbleibenden Brenner mit einem fetteren, das heisst brennstoffreicheren, Brennstoff-Luft-Gemisch betrieben, wodurch die Verbrennung robuster erfolgt, was sich in einem Abfall der niederfrequenten Verbrennungs-Druckschwingungen manifestiert. Nach dem Erkennen einer potenziellen Verbrennungsinstabilität wird also die Brennstoffverteilung innerhalb der Feuerungseinrichtung in Richtung der Betriebssicherheit und der stabileren Verbrennung verstellt, was aber auf der anderen Seite erhöhte Emissionen, insbesondere an Stickoxiden, nach sich zieht. Mit anderen Worten wird der thermische Leistungsumsatz in kleineren Bereichen konzentriert.

Auf der anderen Seite hat sich auch gezeigt, dass eine Konzentration des thermischen Leistungsumsatzes zu einem Anstieg der Amplitude von Verbrennungs-Druckschwingungen führen kann. Dies manifestiert sich häufig in einem Anstieg der Druckschwingungsamplituden in einem höherfrequenten Bereich, über 100 Hz und beispielsweise in einem Frequenzbereich von 200 Hz bis 500 Hz; es wurden aber auch schon charakteristische Frequenzen im Bereich von 50 Hz bis 200 Hz, insbesondere von 75 Hz bis 115 Hz, oder im kHz-Bereich beobachtet. Zur Bildung einer hochfrequenten Druckschwingungskenngrösse sind entsprechend die Druckschwingungsamplituden in dem jeweiligen brennraumspezifisch charakteristischen Frequenzbereich auszuwerten. Wenn diese einen Grenzwert überschreitet, werden gemäss der Erfindung Massnahmen ergriffen, um den thermischen Leistungsumsatz auf ein grösseres Volumen zu verteilen, das heisst, es müssen, je nach der konkreten Ausführungsform der Feuerungseinrichtung, mehr Brenner mit Brennstoff beaufschlagt werden oder es muss den Nebenbrennern mehr Brennstoff zugeführt werden; wenn die interne Brennstoffverteilung eines Brenners der aus WO 01/96785 bekannten Bauart zu variieren ist, müssen die entsprechenden Massnahmen ergriffen werden.

Im Rahmen der vorliegenden Beschreibung wird selbstverständlich auch das Abstellen der Brennstoffzufuhr zu einem Brenner oder einer Brennergruppe mittels einer Ein/Aus-Funktion unter das Vermindern des Brennstoffmassenstroms zu diesem Brenner oder der Brennergruppe subsummiert, und das Einschalten der Brennstoffzufuhr mittels einer Ein/Aus-Funktion unter das Erhöhen des Brennstoffmassenstroms zu diesem Brenner oder der Brennergruppe. Im Rahmen der vorliegenden Offenbarung wird demnach eine Verminderung der Anzahl der sich im Betrieb befindlichen Brenner, also das Abschalten eines Brenners oder einer Brennergruppe, mit einer Verminderung der Brennstoffzufuhr zu den Nebenbrennern gleichwertig betrachtet. Ebenso wird eine Erhöhung der Anzahl der in Betrieb befindlichen Brenner, also das Zuschalten eines Brenners oder einer Brennergruppe, als gleichwertig mit der Erhöhung des den Nebenbrennern zuströmenden Brennstoffanteils betrachtet. In jedem Falle wird nämlich das Brennstoff-Luft-Gemisch der Lastbrenner in Richtung eines stabileren oder eines schadstoffärmeren Betriebes verstellt. Die beiden Konzepte unterscheiden sich in der Hinsicht, dass beim Zu- und Abschalten einzelner Brenner oder Brennergruppen alle in Betrieb befindlichen Brenner im Allgemeinen mit im Wesentlichen identischem Brennstoff-Luft-Verhältnis betrieben werden, wobei das Brennstoff-Luft-Verhältnis der Einzelbrenner dadurch verändert wird, dass ein Gesamt-Brennstoffmassenstrom auf unterschiedlich viele Brenner verteilt wird. Bei der kontinuierlichen Veränderung der Brennstoffaufteilung zwischen Last- und Nebenbrennern hingegen wird die Brennstoffverteilung zwischen den Lastbrennern und den Nebenbrennern derart verändert, dass die Nebenbrenner mit einem anderen, im allgemeinen magereren, Brennstoff-Luft-Verhältnis als die Lastbrenner betrieben werden. Wie bereits einleitend erwähnt, sind auch Feuerungseinrichtungen bekannt, bei denen die diskontinuierliche Schaltung von Brennern oder Brennergruppen mit der kontinuierlich variablen Aufteilung des Gesamt-Brennstoffmassenstroms kombiniert wird. Ebenso kann, wenn ein Brenner unabhängig voneinander mit Brennstoff beaufschlagbare Gruppen von Brennstoffaustrittsöffnungen aufweist, die Brennstoffaufteilung innerhalb des Brenners variiert werden, wodurch sich im Strömungsfeld des jeweiligen Brenners Bereiche unterschiedlicher Stöchiometrie ausbilden, welche sich in Richtung einer stabilen oder einer schadstoffarmen Verbrennung verstellen lassen; auch diese brennerinterne Verstellung kann sowohl kontinuierlich als auch diskontinuierlich erfolgen.

Gemäss einer Ausführungsform der Erfindung wird die Feuerungseinrichtung als Brennkammer einer Gasturbogruppe betrieben.

Gemäss einer weiteren Ausführungsform der Erfindung umfasst die Feuerungseinrichtung mehrere Brennräume. Dies ist beispielsweise bei Gasturbogruppen mit sogenannter sequentieller Verbrennung der Fall, wie sie aus der EP 620 362 bekanntgeworden sind. Beim Überschreiten eines Grenzwertes einer Druckschwingungskenngrösse wird gemäss einer Verfahrensvariante die Brennstoffverteilung zwischen den Brennstoffaustrittsöffnungen der Brennkammern verändert. Bevorzugt werden die Verbrennungs-Druckschwingungen in jedem der Brennräume gemessen, und entsprechende Druckschwingungs-Kenngrössen gebildet. In einer Ausführungsform umfasst eine Feuerungseinrichtung einen ersten Brennraum und einen zweiten Brennraum. Im ersten Brennraum sind unterschiedliche Gruppen von Brennstoffaustrittsöffnungen angeordnet, und die Aufteilung des Brennstoffmassenstroms auf die Gruppen von Brennstoffaustrittsöffnungen ist steuerbar. Im zweiten Brennraum ist nur eine Gruppe von Brennstoffaustrittsöffnungen angeordnet. Der Feuerungseinrichtung wird ein Gesamt-Brennstoffmassenstrom zugemessen und auf den ersten und den zweiten Brennraum verteilt. Wenn eine Druckschwingungskenngrösse im zweiten Brennraum einen Grenzwert übersteigt, wird der Brennstoffanteil der zweiten Brennkammer entsprechend verändert, und beispielsweise beim Überschreiten eines Grenzwertes einer niederfrequenten Druckschwingungskenngrösse erhöht. Dies hat Auswirkungen auf das Brennstoff-Luft-Verhältnis im ersten Brennraum; wenn dort ein Anstieg einer Druckschwingungskenngrösse beobachtet wird, wird gemäss einem der oben beschriebenen Mechanismen auf die brennrauminterne Brennstoffaufteilung eingegriffen.

Gemäss der Erfindung wird eine gewisse Zeit, beispielsweise eine halbe Stunde, nach der Verstellung in Richtung Betriebssicherheit die Stabilitätsgrenze erneut getestet, indem die Brennstoffzufuhr zum ersten Brenner
Brenner oder zur ersten Brennergruppe, also beispielsweise zu den Nebenbrennern, erhöht wird. Diese Erhöhung kann beispielsweise durch das weitere Öffnen eines kontinuierlich wirkenden Brennstoffmassenstrom-Stellorgans erfolgen, oder durch das Öffnen eines als Brennstoffmassenstrom-Stellorgan für einen Brenner oder einer Brennergruppe wirkenden diskontinuierlichen Absperrorgans, mit einer Ein/Aus-Funktion. Auf diese Weise kann getestet werden, ob der ursprüngliche schadstoffärmere, aber tendenziell weniger stabile, Betriebszustand wieder hergestellt werden kann.
In einer weiteren Ausführungsform der Erfindung wird die Verstellung zum schadstoffärmeren Betriebszustand ausgelöst, wenn ein zweiter, niedrigerer Grenzwert einer Druckschwingungskenngrösse unterschritten ist.

Eine Ausführungsform der Erfindung zeichnet sich dadurch aus, dass in regelmässigen Zeitintervallen, oder beim Unterschreiten eines niedrigen Grenzwertes der Druckschwingungskenngrösse, schrittweise in zeitlich gestuften Inkrementen die Brennstoffzufuhr zu den Lastbrennern bei konstantem Gesamt-Brennstoffmassenstrom vermindert wird, das heisst, mit anderen Worten, es wird beispielsweise der Brennstoffanteil, der den Nebenbrennern zugeführt wird, erhöht, oder es wird die Anzahl der in Betrieb befindlichen Brenner erhöht. Wenn nunmehr der erste, hohe Grenzwert der Druckschwingungskenngrösse überschritten wird, wird dies als Zeichen für das Erreichen der Stabilitätsgrenze gewertet, und es wird entsprechend der Brennstoffanteil der Lastbrenner erhöht, um eine Sicherheitsmarge gegen die Stabilitätsgrenze und gleichzeitig einen möglichst emissionsarmen Betrieb zu gewährleisten.

In einer Ausführungsform der Erfindung wird der gesamte Brennstoffmassenstrom durch ein Gesamtmassenstrom-Stellorgan geleitet. Die Stellung des Gesamtmassenstrom-Stellorgans wird gemäss einer Ausführungsform der Erfindung als Stellgrösse eines Regelkreises verwendet, in dem beispielsweise eine Feuerungstemperatur der Feuerungseinrichtung, der Brennstoffmassenstrom, oder eine Leistungskenngrösse einer Gasturbogruppe, als deren Brennkammer die Feuerungseinrichtung betrieben wird, insbesondere die Netto-Leistungsabgabe der Gasturbogruppe, geregelt wird. Stromab des Gesamtmassenstrom-Stellorgans wird der gesamte Brennstoffmassenstrom in wenigstens zwei Teilmassenströme verzweigt. Wenigstens ein Teilmassenstrom wird durch ein Teilmassenstrom-Stellorgan zugemessen. Das Teilmassenstrom-Stellorgan kann dabei ein diskontinuierlich arbeitendes Absperrorgan mit einer Offen/Geschlossen-Funktion sein, oder ein kontinuierlich arbeitendes Stellorgan, welches eine im wesentlichen stufenlose Verstellung des Teilmassenstromes erlaubt. Gemäss einer Ausführungsform der Erfindung verzweigt der Gesamtmassenstrom in wenigstens zwei Teilmassenströme, welche jeweils einer Gruppe von Brennstoffaustrittsöffnungen, insbesondere einem Brenner oder einer Brennergruppe, zugeführt werden, von denen wenigstens ein Teilmassenstrom mittels eines Teilmassenstrom-Stellorgans einstellbar ist.

Gemäss einer alternativen Ausführungsform der Erfindung wird der Gesamtmassenstrom unmittelbar in eine Anzahl von Teilmassenströmen verzweigt, welche jeweils über Teilmassenstrom-Stellorgane einstellbar sind. Eines der Stellorgane wird dabei als Stellorgan in einem geschlossenen Regelkreis zur Regelung einer Regelgrösse, beispielsweise einer Feuerungstemperatur der Feuerungseinrichtung, eines Brennstoffmassenstroms, oder, wenn die Feuerungseinrichtung als Brennkammer einer Gasturbogruppe betrieben wird, einer Leistungskenngrösse der Gasturbogruppe, betrieben. Wenigstens ein weiteres Stellorgan wird gesteuert betrieben.

Wenn die Feuerungseinrichtung als Brennkammer einer Gasturbogruppe betrieben wird, erfolgt die Steuerung des Gesamt-Brennstoffmassenstroms bevorzugt, um die Netto-Leistungsabgabe der Gasturbogruppe, insbesondere die elektrische Leistungsabgabe eines von der Gasturbogruppe angetriebenen Generators, zu regeln. Alternativ kann der Gesamt-Brennstoffmassentrom auch derart gesteuert werden, dass eine Turbineneintrittstemperatur auf einen Sollwert eingeregelt oder auf einen Maximalwert begrenzt wird.

Weitere Ausführungsformen und Vorzugsvarianten der Erfindung ergeben sich aus den Unteransprüchen und den nachfolgend beschriebenen Ausführungsbeispielen.

Zusammenfassend beruht die Erfindung darauf, die Verbrennungsdruckschwingungen in einer Feuerungseinrichtung durch die lokale Verteilung des Brennstoffmassenstroms sowie Veränderungen der lokalen Brennstoff-Luft-Verhältnisse zu beeinflussen. Die lokale Verteilung des Brennstoffmassenstroms erfolgt durch die unterschiedliche Brennstoffbeaufschlagung unterschiedlicher Brennstoffaustrittsöffnungen. Gemäss einer Ausführungsform der Erfindung umfasst die Feuerungseinrichtung wenigstens zwei Brennräume, und es wird auf die Aufteilung eines Gesamt-Brennstoffmassenstroms zwischen zwei Brennräumen Einfluss genommen. Gemäss einer weiteren Ausführungsform wird die brennrauminterne Verteilung des Brennstoffmassenstroms beeinflusst. Dies erfolgt wiederum, indem die Aufteilung des Brennstoffmassenstroms auf unterschiedliche Brenner und/oder Brennergruppen verändert wird, oder indem die brennerinterne Brennstoffverteilung auf unabhängig voneinander mit Brennstoff beaufschlagbare Gruppen von Brennstoffaustrittsöffnungen eines Brenners veränderlich angesteuert wird. Selbstverständlich sind die Mechanismen des Steuereingriffs untereinander kombinierbar. Als auslösendes Ereignis für einen Eingriff auf die Brennstoffverteilung wird gemäss einer Ausführungsform der Erfindung das Überschreiten eines Grenzwertes einer Pulsationskenngrösse herangezogen. Insbesondere wird das Überschreiten einer Kenngrösse niederfrequenter Pulsationen als Zeichen für auftretende Verbrennungsinstabilitäten aufgrund zu brennstoffarmer Brennstoff-Luft-Verhältnisse gewertet. Die Brennstoffverteilung wird dann derart geändert, dass sich der Brennstoffmassenstrom auf kleinere, brennstoffreichere Bereiche konzentriert; dies erfolgt, indem beispielsweise der Brennstoffmassenstrom zu einzelnen Brennern oder Gruppen von Brennern abgesperrt oder angedrosselt wird, derart, dass andere Brenner oder Gruppen von Brennern brennstoffreicher betrieben werden. Bei einer Veränderung der brennerinternen Brennstoffverteilung müssen analoge Schritte durchgeführt werden, das heisst, es wird die Brennstoffzufuhr zu Gruppen von Brennstoffaustrittsöffnungen angedrosselt oder abgesperrt, und dafür ein grösserer Brennstoffmassenstrom zu den verbleibenden Gruppen von Brennstoffaustrittsöffnungen geleitet, welche in der Folge vergleichsweise brennstoffreiche Zonen erzeugen. Das Auftreten höherfrequenter Druckschwingungsamplituden oberhalb eines Grenzwertes wird hingegen in einer Ausführungsform der Erfindung als Zeichen für eine lokal zu hohe thermische Leistungsdichte gewertet. Die Verteilung des Brennstoffmassenstroms wird demgemäss so verändert, dass der Brennstoff breiter im Brennraum verteilt wird und lokal zu brennstoffreiche Zonen vermieden werden. Die hierzu bevorzugt durchzuführenden Eingriffe erfolgen analog zu den oben skizzierten, und bedürfen daher an dieser Stelle keiner weiteren expliziten Erklärungen.

### Kurze Beschreibung der Zeichnung

Die Erfindung wird nachfolgend anhand von in der Zeichnung illustrierten Ausführungsbeispielen näher erläutert. Im einzelnen zeigen:
Figur 1 eine Gasturbogruppe mitsamt der Brennstoffversorgung und der Verteilung des Brennstoffmassenstroms auf unterschiedliche Brenner oder Brennergruppen;
Figur 2 das Brennstoffversorgungs- und -verteilsystem einer mit einer Mehrzahl von Brennern versehenen Feuerungseinrichtung;
Figur 3 ein beispielhaftes Betriebskonzept des in Figur 2 dargestellten Mehrbrennersystems;
Figur 4 ein zweites Beispiel für die Brennstoffverteilung in einem Mehrbrennersystem einer Feuerungseinrichtung;
Figur 5 eine schematische Darstellung der Stickoxidemissionen und der Brennkammerdruckschwingungen einer Feuerungseinrichtung, welche mit dem in Figur 4 dargestellten Brennersystem betrieben wird;
Figur 6 eine Darstellung des erfindungsgemässen Verfahrens, über der Zeit aufgetragen;
Figur 7 eine Darstellung des erfindungsgemässen Verfahrens in einem Betriebskennfeld einer Feuerungseinrichtung;
Figur 8 ein weiteres Beispiel für ein Brennstoffverteilsystem eines Mehrbrennersystems in einer Feuerungseinrichtung;
Figur 9 ein Beispiel für die Ausführung der Erfindung mit Brennern mit brennerinterner Brennstoffaufteilung;
Figur 10 ein Beispiel für die Ausführung der Erfindung in einer Feuerungseinrichtung, welche zwei Brennräume aufweist.

Für das Verständnis der Erfindung nicht unmittelbar notwendige Elemente sind weggelassen. Die Ausführungsbeispiele sind rein instruktiv zu verstehen, und sollen nicht zu einer Einschränkung der in den Ansprüchen gekennzeichneten Erfindung herangezogen werden.

### Weg zur Ausführung der Erfindung

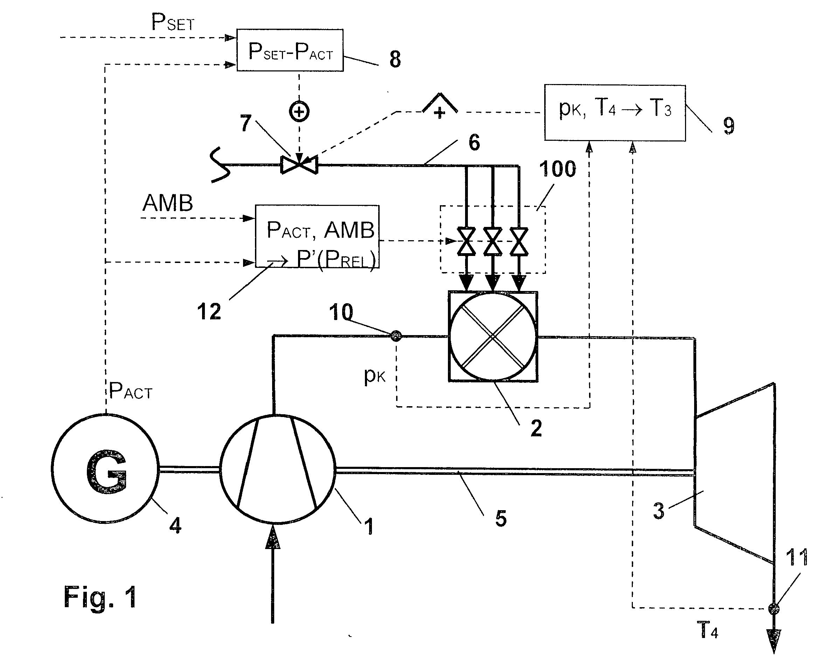

Figur 1 illustriert in einer vereinfachten Darstellung eine beispielhafte Steuerung der Brennstoffzumessung einer Gasturbogruppe. Die Gasturbogruppe ist an sich bekannt: In der Brennkammer 2 erzeugtes Heissgas wird leistungserzeugend in der Turbine 3 entspannt. Die Turbine 3 ist mit dem Verdichter 1 und dem Generator 4 auf einer gemeinsamen Welle 5 angeordnet, und treibt diese an. Der Anteil der Leistung, der nicht zum Antrieb des Verdichters benötigt wird, steht als Nutzleistung P_{ACT} zum Antrieb des Generators zur Verfügung. Der Brennkammer 2 wird über eine Brennstoffleitung 6 ein Brennstoffmassenstrom zugeführt, der vom Gesamt-Brennstoffmassenstrom-Stellorgan 7 zugemessen wird. Die Brennstoffleitung 6 verzweigt in eine Anzahl einzelner Brennstoffleitungen, von denen jede der Brennstoffversorgung von nicht dargestellten Brennern oder Gruppen von Brennern dient. Die Brenner sind bevorzugt Vormischbrenner der einleitend erwähnten Art. Das Gesamtmassenstrom-Stellorgan 7 wird vom Leistungsregler 8 angesteuert. Der Leistungsregler 8 erfasst als Regelgrösse die als elektrische Leistung des Generators 4 erfasste Ist-Nutzleistung der Gasturbogruppe; es könnte dies auch die Blockleistung einer Kombianlage sein. Die Ist-Leistung wird mit einer Soll-Leistung P_{SET} verglichen. Der Regler regelt die Regelabweichung P_{SET} - P_{ACT} aus, indem das Stellorgan 7 weiter geöffnet wird, falls die Ist-Leistung kleiner als die Soll-Leistung ist, und indem das Stellorgan 7 weiter geschlossen wird, falls die Ist-Leistung über der Soll-Leistung liegt. Selbstverständlich darf das Brennstoffmassenstrom-Stellorgan 7 nicht unbegrenzt geöffnet werden, schon aus dem Grunde, damit die Temperatur T₃ am Eintritt in die Turbine 3 auf einen zulässigen Maximalwert beschränkt bleibt. Aus verschiedenen Gründen ist die unmittelbare Messung der Temperatur am Turbineneintritt bei modernen Gasturbinen meist nicht möglich. Die Turbineneintrittstemperatur wird daher in einem Funktionsblock 9 aus dem Druckverhältnis über die Turbine und der Temperatur am Turbinenaustritt berechnet. Da der Umgebungsdruck und damit auch der Abgasdruck bei stationären Gasturbinen allgemein nur gering schwankt, und die Brennkammerdruckverluste ebenfalls gering sein sollen, werden als Eingangsgrösse für diese Berechnung häufig der an der Druckmessstelle 10 gemessenen Verdichterenddruck p_{K} und die an der Temperaturmessstelle 11 gemessene Temperatur T₄ verwendet. Im Sinne einer Grenzregelung greift der Funktionsblock 9 dann ebenfalls auf die Öffnung des Stellorgans 7 ein, falls die ermittelte Temperatur einen oberen Grenzwert erreicht oder überschreitet. Die Zumessung von Brennstoff-Teilmassenströmen zu den einzelnen Brennern oder Brennergruppen erfolgt durch Stellorgane 100. Diese werden von einem Funktionsblock 12 angesteuert. Der Funktionblock 12 bildet aus einer Norm-Referenzleistung und aktuell ermittelten Umgebungsbedingungen AMB - insbesondere gehen die Umgebungstemperatur, der Umgebungsdruck, und die Luftfeuchte der Umgebungsluft in diese Berechnung ein - eine Referenzleistung. Die Ist-Leistung P_{ACT} wird auf diese Referenzleistung bezogen, woraus eine Relativleistung P_{REL} als Leistungskenngrösse P' berechnet wird. Im Funktionsblock 12 sind Sollwerte für die Stellung der Stellorgane 100 abhängig von der Relativleistung abgelegt. Der Funktionblock 12 steuert demnach in Abhängigkeit von der Relativleistung die Stellung der Brennstoff-Teilmassenstrom-Stellorgane 100, und damit die Aufteilung des Gesamt-Brennstoffmassenstroms in einzelnen Brennern und/oder Brennergruppen und/oder Gruppen von Brennstoffausströmöffnungen eines Brenners zugeordnete Brennstoff-Teilmassenströme.

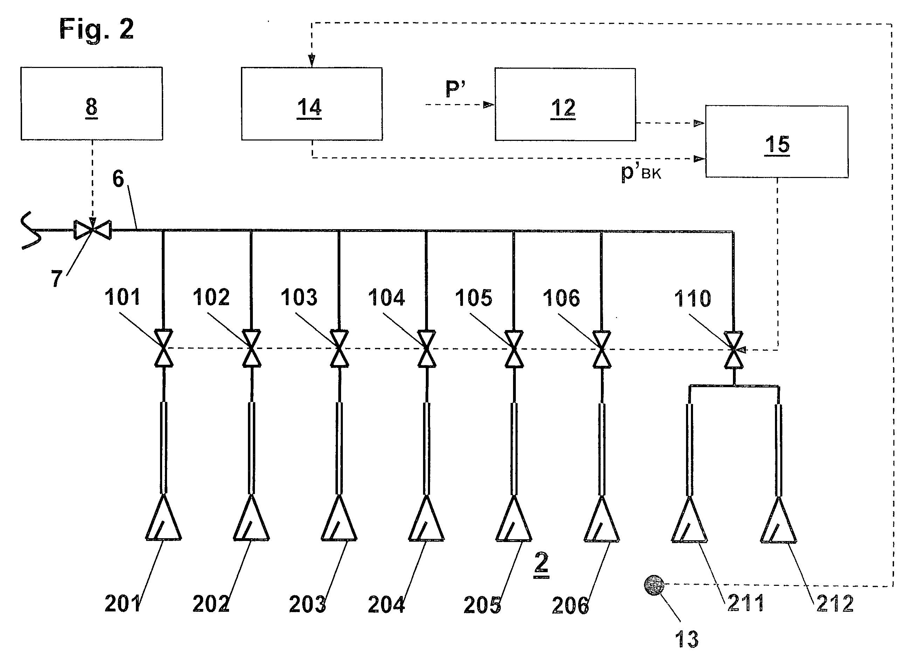

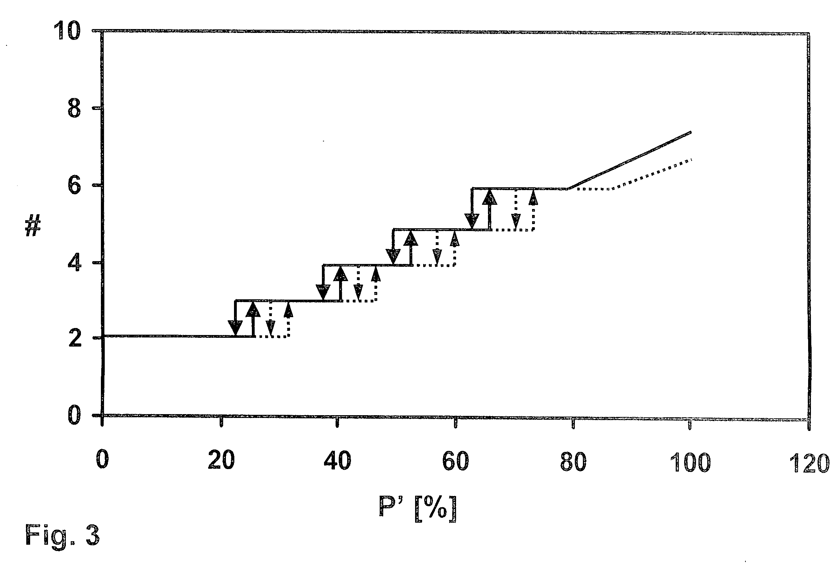

Gemäss Figur 2 sind an einem Brennraum 2 acht Brenner 201, 202, 203, 204, 205, 206, 211 und 212 angeordnet. Die Aufteilung des vom Gesamtbrennstoffmassenstrom-Stellorgan zugemessenen Brennstoffmassenstrom auf die Brenner erfolgt über die Teilmassenstrom-Stellorgane 101, 102, 103, 104, 105, 106, und 110. Die Stellorgane 101 bis 106 sind dabei diskontinuierlich wirkende Absperrorgane, welche zwischen einer Offen- und einer Geschlossen-Position umschaltbar sind. Diese wirken jeweils auf einzelne Brenner. Das Stellorgan 110 ist ein kontinuierlich verstellbares Drosselorgan, und wirkt auf eine von den Brennern 211 und 212 gebildete Brennergruppe. Dieses Beispiel ist keineswegs einschränkend zu verstehen; es können genausogut Absperrorgane auf Brennergruppen und/oder kontinuierlich wirkende Drosselorgane auf Einzelbrenner wirken. Im Funktionsblock 12 sind Sollwerte für die Stellung der Stellorgane 101 bis 106 und 110 in Abhängigkeit von einer geeigneten Leitgrösse P' abgelegt. Diese Leitgrösse kann der Brennstoffmassenstrom, eine Feuerungstemperatur, und dergleichen sein, und sollte vorzugsweise mit dem Brennstoff-Luft-Verhältnis korrelieren. Bei Gasturbogruppen wird im häufig die relative Leistung P_{REL} der Gasturbogruppe herangezogen, deren Berechnung oben skizziert ist. Figur 3 zeigt ein Beispiel für eine solche abgelegte Wertemenge der Stellung der Brennstoffteilmassenstrom-Stellorgane in Abhängigkeit von einer dimensionslosen Leistungskenngrösse der Feuerungseinrichtung. Dabei ist auf der waagerechten Achse die Leistungskenngrösse aufgetragen, und auf der senkrechten Achse die Anzahl der brennstoffbeaufschlagten Brenner. Dabei ist liegt der Lastpunkt, bei dem ein Brenner durch Öffnen eines Absperrorgans zugeschaltet wird, immer etwas höher als der Lastpunkt, bei dem die Brennstoffzufuhr zu einem Brenner wieder ausgeschaltet wird; dies gewährleistet die Stabilität der Brennerschaltung bei geringen Leistungsschwankungen, welche aufgrund eines Schaltvorgangs auftreten. Nahe der Volllastleistung wird das kontinuierlich arbeitende Stellorgan 110 geöffnet, über welches die Brenner 211 und 212 mit Brennstoff versorgt werden. Bei einer vollständigen Öffnung des Stellorgans 110 sind 8 Brenner vollständig in Betrieb, was in der Praxis jedoch an sich nicht erreicht wird. Eine teilweise Öffnung des Stellorgans 110 wird durch die Angabe einer nicht ganzzahligen Brenneranzahl zwischen sechs und acht dargestellt. Als Faustregel bedeutet eine grössere Anzahl aktiver Brenner eine grössere Luftzahl am Einzelbrenner, und damit geringere Stickoxidbildung, aber tendenziell auch eine geringere Verbrennungsstabilität.

Im Rückgriff auf Figur 2 dient eine Pulsationssonde 13 der Erfassung von Brennkammerdruckschwingungen. Die Messung erfolgt bevorzugt wechselspannungsgekoppelt, unter Unterdrückung des Gleichanteils. Die Messwerte werden in einer Auswerteeeinheit 14 weiterverarbeitet, und auf eine geeignete Weise wird eine Druckschwingungskenngrösse p'_{BK} gebildet, welche zur Bewertung der Verbrennungsstabilität herangezogen wird. Die Kenngrösse kann zum Beispiel gebildet werden, indem die Druckschwingungsmesswerte zunächst tiefpassgefiltert werden, derart, dass beispielsweise ein Summenpegel der Amplituden in einem Frequenzband von 8 Hz bis 35 Hz weiterverarbeitet wird. In einem einfachsten Fall wird zur Bildung der Druckschwingungskenngrösse ein Summenpegel der Druckschwingungen in dem ausgewerteten Frequenzband gebildet. In einer anderen Ausführungsform ist die Druckschwingungskenngrösse eine Zeit, innerhalb derer dieser Summenpegel oberhalb eines bestimmten Grenzwertes liegt. In einer anderen Ausführungsform werden zur Bildung der Druckschwingungskenngrösse p'_{BK} die Ereignisse innerhalb eines Zeitintervalls von beispielsweise 30 Sekunden Dauer gezählt, bei denen die ausgewertete Pulsationsamplitude für wenigstens eine gewisse Dauer, beispielsweise 0,3 Sekunden, einen ersten Amplitudengrenzwert, überschritten hat. Die Kenngrösse ist dann an sich ein Zähler. Es kann parallel dazu eine zweite Kenngrösse gebildet werden, welche zum Beispiel alle Ereignisse zählt, bei denen innerhalb eines bestimmten Zeitintervalls die Druckschwingungsamplitude für eine kürzere Dauer einen zweiten, höheren Grenzwert überschritten hat. Auch diese Kenngrösse ist ein Zähler. Wenn nun einer der Zähler einen Grenzwert überschritten hat, zum Beispiel "zehn Ereignisse innerhalb dreissig Sekunden " für den ersten Zähler oder "drei Ereignisse innerhalb von zehn Sekunden" für den zweiten Zähler, oder wenn ein einzelnes Ereignis festgestellt wird, bei dem ein dritter Grenzwert der Amplitude überschritten wird, wobei dieser dritte Grenzwert wiederum höher ist als der zweite Grenzwert, wird eine Aktion ausgelöst, indem bei konstantem Gesamt-Brennstoffmassenstrom der Teilmassenstrom eines Brenners oder einer Brennergruppe vermindert wird, wobei selbstverständlich auch ein vollständiges Absperren der Brennstoffzufuhr eine Verminderung des Teilmassenstromes darstellt. Mit grösstem Vorteil wirken die als Beispiel genannten Kriterien durch eine "ODER"-Verknüpfung auf die Steuerung der Stellorgane, derart, dass bereits die Erfüllung eines Kriteriums zur Auslösung der Verstellung in Richtung der höheren Betriebssicherheit dient. Die Verminderung eines Teilmassenstromes wird, je nach aktuellem Betriebszustand, durch ein Schliessen des kontinuierlichen Stellorgans 110 um ein vorbestimmtes Inkrement oder durch ein Schliessen eines der Absperrorgane bewirkt, wodurch den anderen, als Lastbrenner wirkenden Brennern mehr Brennstoff zuströmt, was in einer stabileren Verbrennung, aber auch höheren Stickoxidemissionen resultiert. Im Gesamtkontext der Figur 2 wird also ein Funktionsblock 15 vom Funktionsblock 12 mit Sollwerten für die Stellung der Teilmassenstrom-Stellorgane beliefert. Wenn eines der oben genannten Kriterien erfüllt ist, wird im Funktionsblock 15 eine entsprechende Korrektur der Steuersignale für die Teilmassenstrom-Stellorgane ausgelöst, derart, dass beispielsweise der in Figur 3 gestrichelt eingezeichnete Verlauf resultiert. Weil die Brennerschaltpunkte zu einer höheren Relativleistung, in erster Näherung entsprechend mehr Brennstoff bei gleichem Luftmassenstrom, verschoben sind, und bei gleicher Leistung das Stellorgan 110 weniger weit geöffnet ist, werden also die Betriebszustände der gemäss dem ursprünglich vorgegebenen Betriebskonzept magersten Einzelbrennerstöchiometrie vermieden, und der neu eingestellte Betriebszustand ist stabiler als der Ausgangszustand. Der neu eingestellte Betriebszustand ist aber mit höheren Stickoxidemissionen verbunden, was wiederum unerwünscht ist. Mit Vorteil sind daher innerhalb der Steuerlogik auch Kriterien vorgesehen, welche einen Test der Stabilitätsgrenze auslösen. Gemäss einer ersten Ausführungsform der Erfindung wird eine bestimmte Zeitspanne von beispielsweise 20 Minuten, nachdem eine Verstellung des Betriebszustandes stattgefunden hat, wieder ein Brenner durch Öffnen eines der Absperrorgane 101 bis 106 zugeschaltet, oder das Drosselorgan 110 wird um ein Inkrement geöffnet. Gemäss einer zweiten Ausführungsform der Erfindung wird der Test der Stabilitätsgrenze ausgelöst, wenn eine Druckschwingungskenngrösse einen bestimmten Grenzwert unterschreitet, wobei dieser Grenzwert mit grösstem Vorteil niedriger liegt, als der Grenzwert, dessen Überschreiten eine Verstellung zum stabileren Betrieb auslöst.

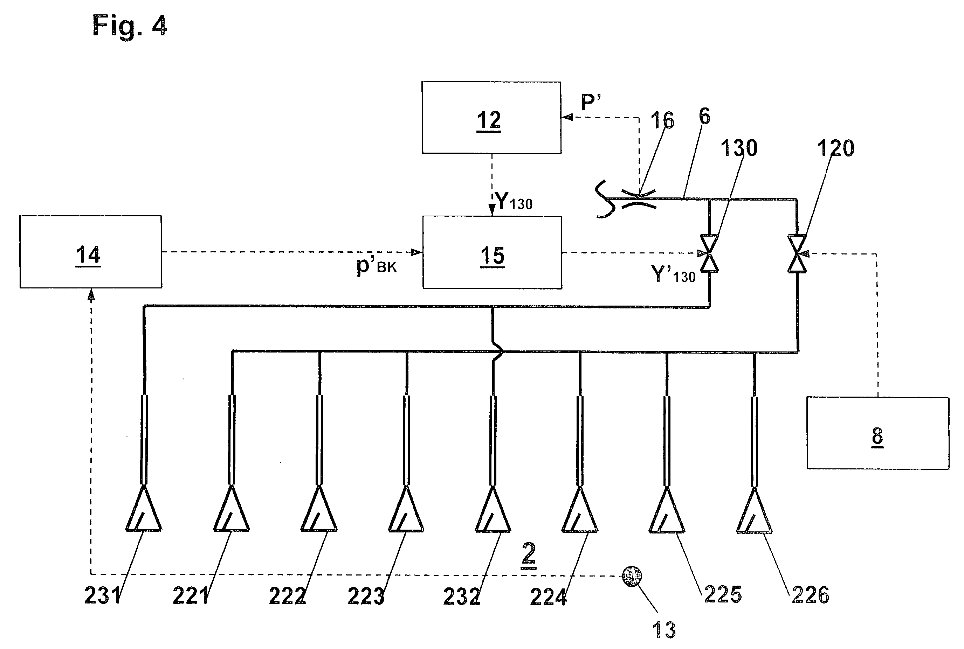

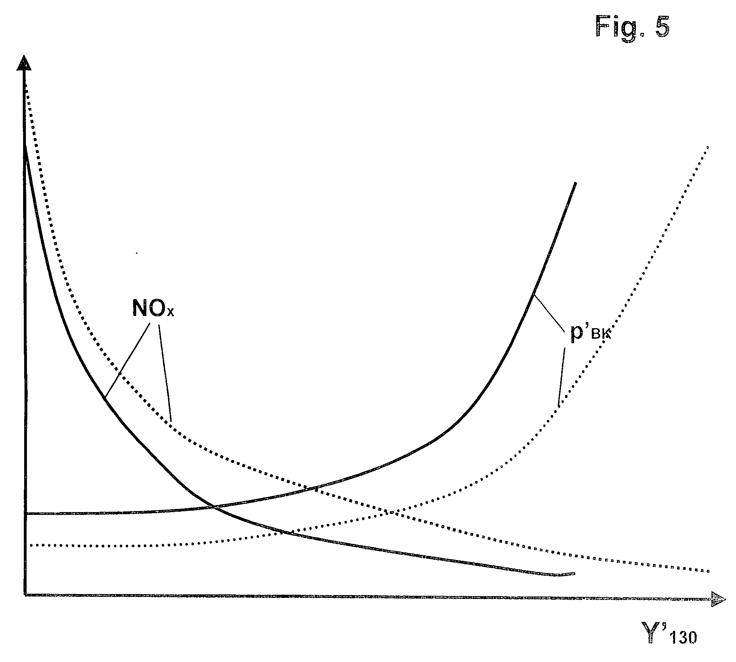

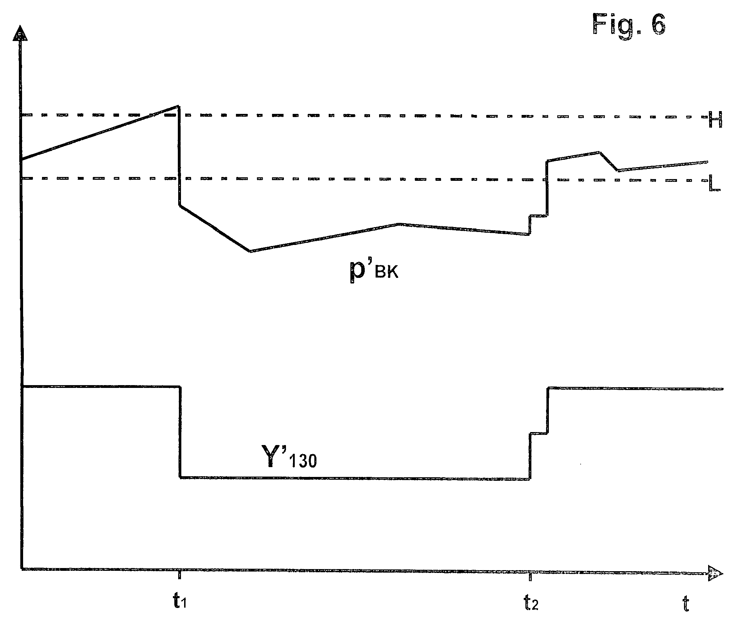

Figur 4 zeigt eine weitere Ausführungsform der Erfindung, bei der die Brenner in zwei Brennergruppen zusammengefasst sind. Eine erste Gruppe 221, 222, 223, 224, 225 und 226 wird als Lastbrenner betrieben und über das kontinuierlich wirkende Massenstrom-Stellorgan 120 mit Brennstoff beaufschlagt. Die Brenner 231 und 232 sind zu einer zweiten Brennergruppe zusammengefasst, welche nachfolgend als Nebenbrennergruppe referiert wird. Die Brennstoffversorgung der Brenner 231 und 232 wird über das Stellorgan 130 gesteuert. Die Öffnung des Stellorgans 130 wird durch die Steuergrösse Y'₁₃₀ gesteuert. Abhängig von einer geeigneten Leistungskenngrösse P' der Feuerungseinrichtung, im Beispiel wird der an der Messstelle 16 gemessene Gesamt-Brennstoffmassentrom herangezogen, generiert der Funktionsblock 12 eine Ausgangsgrösse Y₁₃₀, welche eine Eingangsgrösse des Funktionsblockes 15 darstellt. Die Druckschwingungen im Brennraum 2 werden an der Messstelle 13 erfasst, und im Auswerteglied 14 zu einer Druckschwingungskenngrösse p'_{BK} umgerechnet, welche ebenfalls eine Eingangsgrösse für den Funktionsblock 15 ist. Abhängig von der Druckschwingungskenngrösse wird aus der Grösse Y₁₃₀ die Steuergrösse Y'₁₃₀ gebildet, welche auf die Öffnung des Stellorgans 130 wirkt. Der Regler 8 steuert die Öffnung des Stellorgans 120. Die Regelgrösse dieses Regelkreises ist beispielsweise die erzeugte Heissgastemperatur der Feuerungseinrichtung, oder die Nutzleistung einer Gasturbogruppe. Bei jeweils vorgegebener Öffnung des Stellorgans 130 steuert das Stellorgan 120 damit letztendlich den Gesamt-Brennstoffmassenstrom der Feuerungseinrichtung. Im Allgemeinen werden die Lastbrenner 221 bis 226 mit einem deutlich fetteren Brennstoff-Luft-Gemisch betrieben als die Nebenbrenner 231 und 232. Die Lastbrenner tragen somit im Wesentlichen die thermische Leistung der Feuerungseinrichtung. Die Öffnung des Stellorgans 130 wird so vorgegeben, dass die Stickoxidproduktion der Feuerungseinrichtung ein bestimmtes Niveau nicht überschreitet. Das heisst, oberhalb eines bestimmten Gesamt-Brennstoffmassenstroms wird ein Teil des Brennstoffmassenstroms von den Lastbrennem abgezweigt und zu den Nebenbrennern geleitet. Solange das Brennstoff-Luft-Verhältnis der Lastbrenner hinreichend brennstoffreich ist, erzeugen diese eine robuste Verbrennung im Brennraum 2. Über die Nebenbrenner wird dann ein häufig sehr brennstoffarmes, aber gut vorgemischtes Brennstoff-Luft-Gemisch in den Brennraum 2 eingebracht, welches aufgrund der stabilen Verbrennung in der Art einer Volumenverbrennung mit sehr geringer Stickoxidproduktion in dem erzeugten Heissgas an sich vollständig reagiert. Dementsprechend sind im Wesentlichen die vergleichsweise brennstoffreich betriebenen Lastbrenner für die Stickoxidproduktion und für die Stabilität der Verbrennung ursächlich. Wenn also ein Teil des Gesamt-Brennstoffmassenstroms den Nebenbrennern 231 und 232 zugemessen wird, wird die Stickoxidproduktion vermindert. Wenn allerdings dieser Anteil zu gross wird, wird das Gemisch der Lastbrenner zu brennstoffarm. In der Konsequenz wird die Verbrennung instabil, was sich häufig in einem Anstieg der niederfrequenten Pulsationsamplituden manifestiert. Dies ist in Figur 5 dargestellt. Über der Öffnung Y'₁₃₀ des Stellorgans 130 sind die Emissionswerte NOx und die
Druckschwingungskenngrösse p'_{BK} qualitativ aufgetragen, dies für zwei Leistungskenngrössen, wobei die durchgezogene Linie die Werte für eine niedrigere Leistungskenngrösse darstellt, als die unterbrochenen Linien. Erkennbar ist, dass mit der Öffnung des Stellorgans 130 die Emissionen sehr schnell abnehmen. Ab einem gewissen Punkt steigen allerdings die niederfrequenten Druckschwingungen sehr stark an, weil immer weniger Brennstoff zu den Lastbrennern gelangt, deren Verbrennung also zusehends an Stabilität verliert, bis es an einem gewissen Punkt zum Verlöschen der Flamme kommt. Zur Einhaltung strengster Emissionslimiten werden Feuerungsanlagen mit Vormischbrennern vergleichsweise nahe an dieser Limite betrieben. Die dargestellten Kurven hängen in komplexer Weise von einer Reihe anderer Einflussgrössen ab, das heisst, im Verlaufe des Betriebes kann auf schwer bis nicht vorhersehbare Weise bei konstanter Leistungskenngrösse und bei konstanter Stellung des Stellorgans 130 ein ursprünglich stabiler Zustand in einen potenziell instabilen Zustand übergehen. Genau an dieser Stelle greift eine Ausführungsform des erfindungsgemässen Betriebsverfahrens, das in Figur 6 dargestellt ist. Es ist vereinfacht ein beispielhafter Verlauf der Druckschwingungskenngrösse p'_{BK} und der Steuergrösse Y'₁₃₀ für die Stellung des Stellorgans 130 über der Zeit aufgetragen. Als strichpunktierte Linien sind ein hoher Grenzwert H und ein niedriger Grenzwert L der niederfrequenten Druckschwingungskenngrösse gekennzeichnet. Anfänglich ist ein stabiler Betriebszustand eingestellt. Aufgrund der Veränderung äusserer Einflussgrössen steigt die Druckschwingungskenngrösse an, und überschreitet schliesslich den oberen Grenzwert H. Dies löst zum Zeitpunkt t₁ eine Aktion aus, nämlich, dass das Stellorgan 130 um ein Inkrement geschlossen wird. Die Lastbrenner erhalten daher mehr Brennstoff, und die Verbrennung wird stabiler, was sich in den sinkenden Pulsationen manifestiert, aber auch in höheren Stickoxidemissionen als notwendig. Wenn die Druckschwingungskenngrösse für eine gewisse Zeit unterhalb des niedrigen Grenzwertes L gelegen hat, wird daher zum Zeitpunkt t₂ die Stabilitätsgrenze getestet. Das Stellorgan 130 wird um ein zweites, kleineres Inkrement geöffnet. Die Druckschwingungskenngrösse liegt weiterhin unter dem niedrigen Grenzwert L, weshalb eine weitere Öffnung um das kleinere Inkrement erfolgt. Die Druckschwingungskenngrösse liegt dann zwischen dem niedrigen und dem hohen Grenzwert, und der Betrieb erfolgt einerseits stabil, andererseits mit gleichzeitig unter Berücksichtigung der Verbrennungsstabilität und damit der Betriebssicherheit bestmöglichen Emissionswerten.

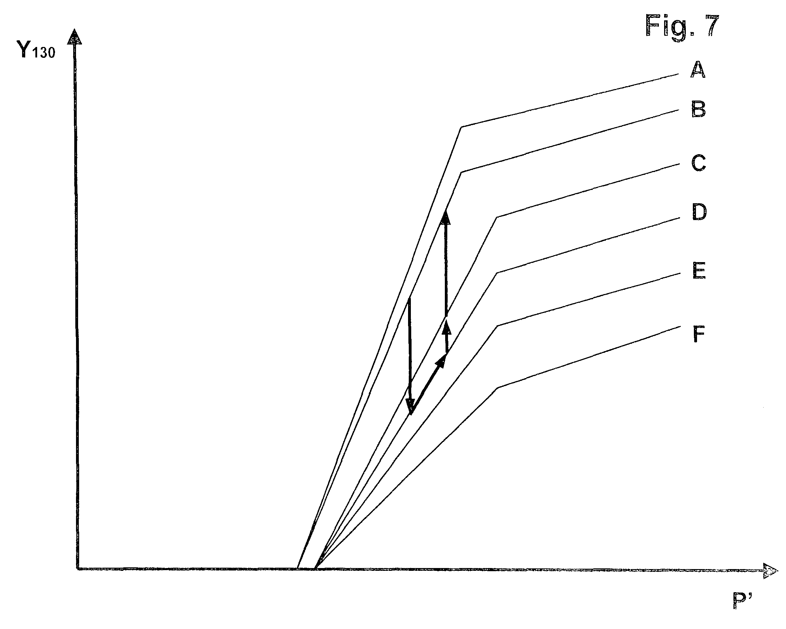

Ein solcher Prozess ist in Figur 7 in einer anderen Darstellung wiedergegeben. Im Funktionsblock 12 der in Figur 4 dargestellten Feuerungseinrichtung ist eine Mehrzahl funktioneller Abhängigkeiten der Stellorganöffnungs-Steuergrösse Y₁₃₀ abgelegt. Im Ausgangsbetriebszustand erfolgt die Verstellung des Stellorgans für die Nebengruppe gemäss der mit B gekennzeichneten Kurve. Nach Detektion einer potenziellen Instabilität durch Überschreiten des hohen Grenzwertes der Druckschwingungs-Kenngrösse wird die Stellorganöffnung vermindert, indem die Verstellung entlang der mit D gekennzeichneten Kurve durchgeführt wird. Mit anderen Worten, wird eine andere der funktionalen Abhängigkeiten aktiviert. Bei Veränderungen der Leistungskenngrösse wird die Stellung des Stellorgans gemäss der durch D vorgegebenen funktionellen Abhängigkeit vorgenommen. Zum Test der Pulsationsgrenze erfolgt erst ein Übergang zu der Abhängigkeit C, dann zur Abhängigkeit B.

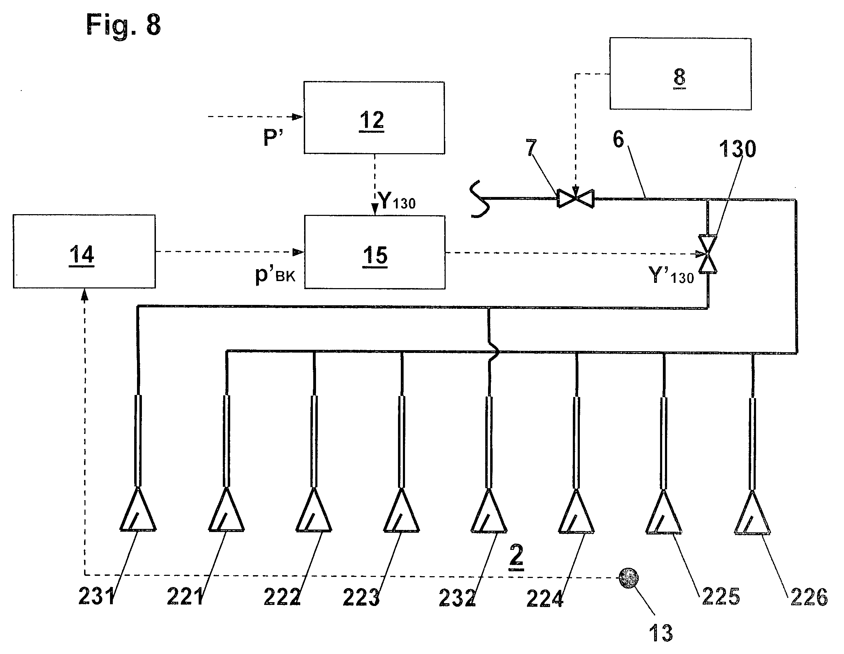

Figur 8 zeigt eine weitere Ausführungsform der Erfindung. Das Gesamtbrennstoffmassenstrom-Stellorgan 7 ist in der gemeinsamen Brennstoffleitung 6 aller Brenner angeordnet. Die Öffnung des Stellorgans 7 wird durch einen Regler 8 gesteuert, der, wie oben dargelegt, ohne Einschränkung ein Temperaturregler oder ein Leistungsregler einer Gasturbogruppe sein kann. Die Stellung des Stellorgans 7 ist damit die Stellgrösse eines Regelkreises, in dem beispielsweise eine Temperatur eines von der Feuerungseinrichtung erzeugten Heissgases oder die Nutzleistung einer Gasturbogruppe, deren Brennkammer die Feuerungseinrichtung ist, geregelt wird. Stromab des Gesamtbrennstoffmassenstrom-Stellorgans 7 verzweigt die Brennstoffleitung in zwei Versorgungsleitungen für Brennergruppen. Dabei sind die Brenner 221, 222, 223, 224, 225 und 226 zu einer ersten Brennergruppe zusammengefasst, und stellen, wie im Zusammenhang mit Figur 4 dargelegt, die Lastbrenner dar. Die Brenner 231 und 232 sind die Nebenbrenner. Der Anteil des Gesamtbrennstoffmassenstroms, der den Brennern 231 und 232 zugemessen wird, wird durch das Stellorgan 130 eingestellt. Die weitere Funktion der dargestellten Ausführungsform erschliesst sich im Lichte der obenstehenden Ausführungen zwanglos: Im Funktionblock 12 ist eine Mehrzahl funktioneller Abhängigkeiten der Stellung des Stellorgans 130 von der Leistungskenngrösse P' abgelegt. Eine Messstelle 13 erfasst die Druckschwingungen im Brennraum 2. In der Auswerteeinheit 14 wird aus den gemessenen Druckschwingungen eine Druckschwingungskenngrösse p'_{BK} gebildet. Abhängig von der Druckschwingungkenngrösse wird im Funktionsblock 15 aus den im Funktionsblock 12 abgelegten Werten die Steuergrösse Y'₁₃₀ für die Öffnung des Stellorgans 130 gebildet.

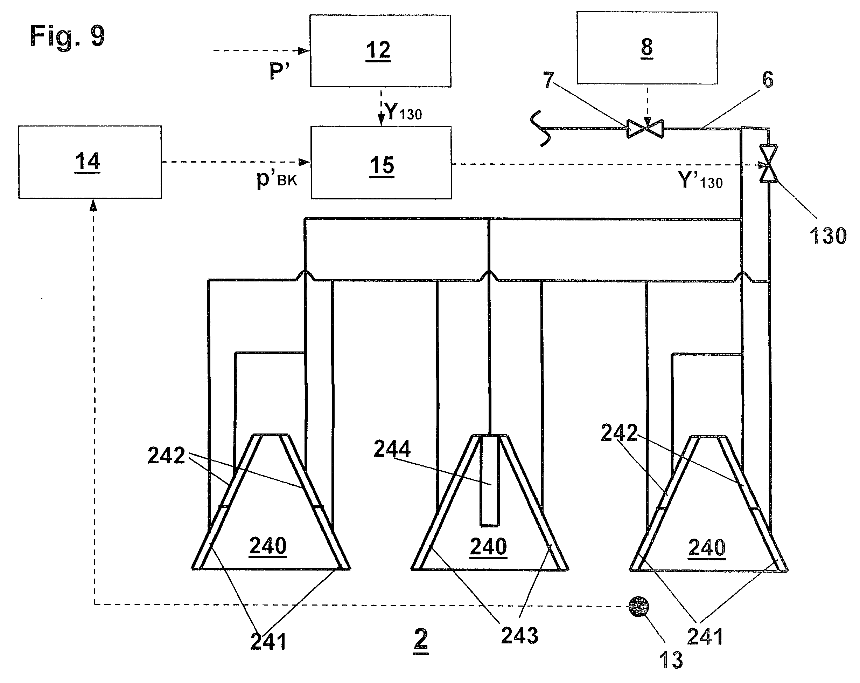

In Figur 9 ist die Erfindung mit Brennern realisiert, welche eine interne Stufung des Brennstoffs auf verschiedene Gruppen von Brennstoffaustrittsöffnungen ermöglichen. Solche Brenner sind beispielsweise aus der WO 01/96785 bekanntgeworden. Die dort bekanntgewordenen Brenner zeichnen sich dadurch aus, dass sie zwei unabhängig voneinander mit Brennstoff beaufschlagbare Gruppen von Brennstoffaustrittsöffnungen aufweisen, welche zur Zufuhr von Brennstoff für eine Vormischverbrennung dienen. Weiterhin sind auch Brenner bekannt, welche neben den Brennstoff-Austrittsöffnungen für den Vormischbetrieb Brennerstoffdüsen für den sogenannten Pilotbetrieb aufweisen; bei diesem Betrieb wird der Brennstoff derart in das Brennluft-Strömungsfeld des Brenners eingedüst, dass der Brennstoff eben nicht vorgemischt wird, sondern in einer Diffusionsflamme verbrannt wird. Die in Figur 9 schematisch dargestellte Feuerungseinrichtung weist Brenner 240 auf, welche jeweils zwei einzeln ansteuerbare Gruppen von Brennstoff-Austrittsöffnungen für den Vormischbetrieb aufweisen. Zwei der Brenner weisen am Brennermantel angeordnete erste Brennstoffaustrittsöffnungen 241 und 242 auf, wobei der Brennstoff über die Brennstoffaustrittsöffnungen 242 näher an der Brennerachse eingedüst wird als der Brennstoff, welcher über die Austrittsöffnungen 241 eingedüst wird. Ein weiterer Brenner weist am Brennermantel angeordnete Brennstoffaustrittsöffnungen 243 auf, sowie auf einem Zentralkörper 244 angeordnete Austrittsöffnungen. Hierzu kann als Faustregel gesagt werden, dass, wenn der Brennstoff über den Zentralkörper im wesentlichen axial eingedüst wird, dieser im Diffusionsmodus verbrannt wird, während wenn der Brennstoff mit einer nennenswerten Radialkomponente des Brennstoff-Austrittsimpulses eingedüst wird, eine Vormischung mit der Verbrennungsluft stattfindet und der Brennstoff im Vormischmodus verbrannt wird. Bei der Ausführungsform gemäss Figur 9 erfolgt die Zumessung des Gesamtbrennstoffmassenstroms und die Aufteilung in Teilmassenströme analog zu der in Figur 8 dargestellten Ausführungsform. Die Teilmassenströme werden allerdings nicht unterschiedlichen Brennern oder Brennergruppen zugeführt, sondern unterschiedlichen Brennstoffaustrittsöffnungen innerhalb jeweils eines Brenners. Unter der Annahme, dass der Brennstoff, welcher näher an der Brennerachse eingebracht wird, mit einer stabileren Flamme umgesetzt wird, wird beim Aufkommen von Brennkammerdruckschwingungen, welche auf eine instabile Verbrennung hindeuten, das Stellorgan 130 angedrosselt, derart, dass mehr Brennstoff zu den Austrittsöffnungen 242 und den Austrittsöffnungen des Zentralkörpers 244 geleitet wird. Selbstverständlich kann die hier dargestellte interne Brennstoffaufteilung in den Brennern vollkommen zwanglos mit der Aufteilung auf unterschiedliche Brenner, wie es in den vorhergehenden Figuren dargestellt wurde, kombiniert werden.

Selbstverständlich ist die Erfindung nicht alleine darauf beschränkt, nur auf niederfrequente Druckschwingungen zu reagieren, welche auf eine mangelnde Flammenstabilität hinweisen. Abhängig von den verwendeten Brennertypen, der Brennkammerbauart, dem Brennstoff, und einer Reihe weiterer Einflussgrössen können auch Druckschwingungen in höheren Frequenzbereichen auftreten; so wurden auch typische Frequenzbereiche von beispielsweise 70 bis 120 Hz oder auch im Bereich einiger 100 Hz beobachtet. Diese sind an sich nicht auf eine mangelnde Flammenstabilität zurückzuführen, sondern treten als Folge komplexer Schwingungs- und Resonanzphänomene auf. Auch diesen Schwingungen kann erfindungsgemäss durch eine Veränderung der Brennstoffverteilung innerhalb eines Mehrbrennersystems begegnet werden. Zur Bildung der Druckschwingungskenngrösse müssen dann die gemessenen Druckschwingungsamplituden in den entsprechenden Frequenzbändern herangezogen werden.

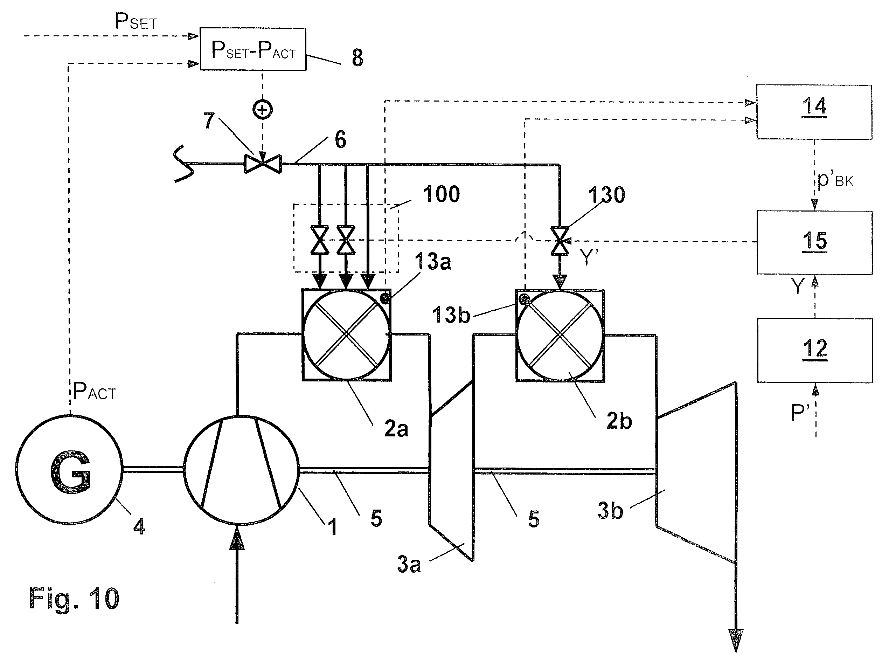

Figur 10 zeigt eine Gasturbogruppe mit sogenannter sequenzieller Verbrennung. Diese Gasturbogruppe ist aus EP 620362 bekanntgeworden; diese Schrift stellt bezüglich des relevanten Informationsgehaltes einen integrierenden Bestandteil der vorliegenden Beschreibung dar. Die Feuerungseinrichtung der Gasturbogruppe weist zwei Brennkammern 2a und 2b auf. Die Brennkammer 2a wird mit verdichteter Luft aus dem Verdichter 1 angeströmt. Das Heissgas aus der Brennkammer 2a wird in einer ersten Turbine 3a teilentspannt; gemäss einer Ausführungsform weist diese Turbine ein sehr niedriges Druckverhältnis von typisch 2 oder 3 auf, während der Gesamtprozess mit einem Druckverhältnis von beispielsweise 20 bis 30 und auch deutlich darüber arbeitet. Das dementsprechend noch unter hohem Druck stehende teilentspannte Heissgas strömt mit einer Temperatur von immer noch einigen 100°C in die zweite Brennkammer 2b ein, wo weiterer Brennstoff zugeführt und verbrannt wird. Das nochmals erhitzte Heissgas wird in der zweiten Turbine 3b arbeitsleistend in etwa bis auf Atmosphärendruck entspannt; stromab der Turbine 3b schliessen sich mit Vorteil Mittel zur Nutzung der Abgaswärme an. Der gesamte Brennstoffmassenstrom wird über das Stellorgan 7 zugemessen, dessen Stellung vom Leistungsregler 8 gesteuert wird. Ein Teil des Brennstoffmassenstroms strömt zur ersten Brennkammer 2a. Die Stellorgane 100 verteilen den Brennstoffmassenstrom innerhalb eines Mehrbrennersystems, wie oben dargelegt. Ein Stellorgan 130 dient der Zumessung eines Brennstoff-Teilmassenstroms zur zweiten Brennkammer 2b. Im Funktionsblock 12 sind, wie oben ebenfalls mehrfach dargelegt, Werte Y für die Stellung der Stellorgane 100 und 130, also die Aufteilung des Brennstoff-Gesamtmassenstroms auf die Brennkammern 2a und 2b einerseits und innerhalb der Brennkammer 2a andererseits, als Funktion einer Leistungskenngrösse P' abgelegt. Weiterhin versteht es sich von selbst, dass für jede Brennkammer auf an sich bekannte Weise eine Grenzwertregelung vorgesehen ist, welche dafür Sorge trägt, dass zulässige Heissgastemperaturen nicht überschritten werden. Mittels Druckmesssonden 13a und 13b werden Brennkammer-Druckschwingungen in beiden Brennkammern 2a und 2b gemessen. Aus den Messwerten wird in der Auswerteeinheit 14 wenigstens eine Druckschwingungs-Kenngrösse p'_{BK} gebildet. Aus den Vorgabewerten Y für die Stellung der Stellorgane und der Druckschwingungs-Kenngrösse wird im Funktionsblock 15 die Stellgrösse Y' gebildet, mit der die Stellorgane 100 und 130 angesteuert werden. Das erfindungsgemässe Verfahren wird nunmehr in einem beispielhaften Fall wie folgt ausgeführt: Der Gasturbogruppe wird über das Gesamt-Brennstoffmassenstrom-Stellorgan 7 ein bestimmter Brennstoffmassenstrom zugemessen, mit dem eine Nutzleistung P_{ACT} erzeugt wird. Der Brennstoffmassenstrom muss auf geeignete Weise derart aufgeteilt werden, dass der ersten Brennkammer 2a ein erster Brennstoff-Teilmassenstrom zugemessen wird, und der zweiten Brennkammer 2b ein zweiter Teilmassenstrom zugemessen wird. Bevorzugt aus der Leistung P_{ACT} wird eine Leistungskenngrösse P' berechnet. Die Stellung des Teilmassenstrom-Stellorgans 130 für die zweite Brennkammer wird in Abhängigkeit von dieser Leistungskenngrösse vorgegeben, und der zweiten Brennkammer wird der zweite Brennstoff-Teilmassenstrom zugemessen. Der restliche Brennstoffmassenstrom wird der ersten Brennkammer zugeführt, und dort von den Stellorganen 100 auf unterschiedliche Brenner und/oder Brennstoffaustrittsöffnungen verteilt. Die Stellung der Stellorgane 100 wird ebenfalls abhängig von der Leistungskenngrösse und gegebenenfalls noch als Funktion der Stellung des Stellorgans 130 vorgegeben. In einem ersten Betriebszustand wird mittels der Messstelle 13b ein Anstieg niederfrequenter Verbrennungs-Druckschwingungen festgestellt. Dies führt dazu, dass eine aus den Druckschwingungen im Frequenzbereich beispielsweise kleiner 100 Hz, so zum Beispiel zwischen 5 Hz und 40 Hz, ermittelte Druckschwingungskenngrösse einen Grenzwert überschreitet. Dies wird als Zeichen für eine zu brennstoffarme Verbrennung gewertet; in der Folge wird das Stellorgan 130 weiter geöffnet, wodurch der zweiten Brennkammer mehr Brennstoff zuströmt. Damit wird die Verbrennung in der ersten Brennkammer brennstoffärmer, was potenziell zu einem Anstieg der an der Messstelle 13a erfassten niederfrequenten Druckschwingungen in der ersten Brennkammer führt. Wenn hier eine als Zeichen für eine zu brennstoffarme Verbrennung gewertete Druckschwingungs-Kenngrösse einen Grenzwert überschreitet, wird die brennrauminterne Brennstoffaufteilung gemäss den in den vorstehenden Ausführungsbeispielen dargelegten Mechanismen geändert, um in beiden Brennkammern stabile und sichere Betriebsbedingungen herzustellen. In einem zweiten Betriebszustand wird mittels der Messstelle 13b ein Anstieg vergleichsweise hochfrequenter Verbrennungs-Druckschwingungen festgestellt. Dies führt dazu, dass eine beispielsweise aus den Druckschwingungen im Frequenzbereich zwischen beispielsweise 250 Hz und 400 Hz ermittelte hochfrequente Druckschwingungskenngrösse einen Grenzwert überschreitet. Dies wird als Zeichen für eine zu brennstoffreiche Verbrennung gewertet; in der Folge wird das Stellorgan 130 stärker angedrosselt, wodurch der zweiten Brennkammer weniger Brennstoff zuströmt. Damit wird die Verbrennung in der ersten Brennkammer brennstoffreicher, was potenziell zu einem Anstieg der an der Messstelle 13a erfassten hochfrequenten Druckschwingungen in der ersten Brennkammer führt. Wenn hier eine als Zeichen für eine zu brennstoffreiche Verbrennung gewertete hochfrequente Druckschwingungs-Kenngrösse einen Grenzwert überschreitet, wird die Brennstoffaufteilung gemäss den in den vorstehenden Ausführungsbeispielen dargelegten Mechanismen geändert, um in beiden Brennkammern günstige Betriebsbedingungen herzustellen, das heisst eine eine schadstoffarme und doch stabile Verbrennung begünstigende Flammenstöchiometrie herzustellen.

Die vorstehenden Ausführungsbeispiele verdeutlichen die in den Ansprüchen gekennzeichnete Erfindung, wobei die Ausführungsbeispiele weder abschliessend sein sollen noch können. Im Gegenteil erschliessen sich dem Fachmann im Lichte der oben gemachten Ausführungen eine Vielzahl weiterer Möglichkeiten zur Realisierung der Erfindung.

### Bezugszeichenliste

- 1: Verdichter
- 2: Brennraum
- 2a: erste Brennkammer, Hochdruckbrennkammer
- 2b: zweite Brennkammer, Niederdruckbrennkammer
- 3: Turbine
- 3a: erste Turbine, Hochdruckturbine
- 3b: zweite Turbine, Niederdruckturbine
- 4: Generator
- 5: Welle
- 6: Brennstoffleitung
- 7: Gesamtbrennstoffmassenstrom-Stellorgan
- 8: Regler, insbesondere Leistungs- oder Temperaturregler
- 9: Regler
- 10: Druckmessstelle, für Verdichterenddruck
- 11: Temperaturmessstelle, für Abgastemperatur
- 12: Funktionsblock
- 13: Druckschwingungsmessstelle, Pulsationssonde
- 13a: Druckschwingungsmessstelle, Pulsationssonde
- 13b: Druckschwingungsmessstelle, Pulsationssonde
- 14: Funktionsblock, Auswerteeinheit
- 15: Funktionsblock
- 16: Massenstrom-Messstelle
- 100: Stellorgane, Stellorgan-Block
- 101: Brennstoff-Teilmassenstromstellorgan
- 102: Brennstoff-Teilmassenstromstellorgan
- 103: Brennstoff-Teilmassenstromstellorgan
- 104: Brennstoff-Teilmassenstromstellorgan
- 105: Brennstoff-Teilmassenstromstellorgan
- 106: Brennstoff-Teilmassenstromstellorgan
- 110: Brennstoff-Teilmassenstromstellorgan
- 120: Brennstoff-Teilmassenstromstellorgan
- 130: Brennstoff-Teilmassenstromstellorgan
- 201: Einzelbrenner
- 202: Einzelbrenner
- 203: Einzelbrenner
- 204: Einzelbrenner
- 205: Einzelbrenner
- 206: Einzelbrenner
- 211: Einzelbrenner
- 212: Einzelbrenner
- 221: Einzelbrenner
- 222: Einzelbrenner
- 223: Einzelbrenner
- 224: Einzelbrenner
- 225: Einzelbrenner
- 226: Einzelbrenner
- 231: Einzelbrenner
- 232: Einzelbrenner
- 240: Brenner
- 241: Brennstoff-Austrittsöffnungen
- 242: Brennstoff-Austrittsöffnungen
- 243: Brennstoff-Austrittsöffnungen
- 244: Zentralkörper, mit Brennstoff-Austrittsöffnungen

- AMB: Umgebungszustände (Druck, Feuchte, Temperatur)
- H: hoher Grenzwert
- L: tiefer Grenzwert
- p_{K}: Verdichterenddruck
- p'_{BK}: Druckschwingungskenngrösse
- P_{ACT}: Nutzleistung, Generatorleistung
- P_{SET}: Soll-Leistung
- P_{REL}: Relativleistung
- P': Leistungskenngrösse
- T₃: Feuerungstemperatur
- T₄: Abgastemperatur
- Y, Y₁₃₀: Sollwert
- Y', Y'₁₃₀: Steuergrösse

## Patentansprüche

1. Verfahren zum Betrieb einer Feuerungseinrichtung, welches Verfahren umfasst, der Feuerungseinrichtung einen Gesamt-Brennstoffmassenstrom zuzumessen, einen ersten Teilmassenstrom des Brennstoffmassenstroms einer ersten Gruppe von Brennstoffaustrittsöffnungen (241, 243) zuzumessen, einen zweiten Teilmassenstrom des Brennstoffmassenstroms einer zweiten Gruppe von Brennstoffaustrittsöffnungen (242, 244) zuzumessen, Druckschwingungen in der Feuerungseinrichtung zu messen, aus den gemessenen Druckschwingungen wenigstens eine Druckschwingungs-Kenngrösse (p'_{BK}) zu bestimmen, beim Überschreiten eines Grenzwertes (H) der Druckschwingungskenngrösse den ersten Teilmassenstrom zu vermindern und den Gesamt-Brennstoffmassenstrom während der Veränderung des ersten Teilmassenstroms konstantzuhalten, und auf diese Weise auf die Aufteilung des Gesamt-Brennstoffmassenstroms einzuwirken, **dadurch gekennzeichnet, dass** nach einer festgelegten Zeit der erste Teilmassenstrom wieder erhöht und der Gesamt-Brennstoffmassenstrom während der Veränderung des ersten Teilmassenstroms konstant gehalten wird.

2. Verfahren nach Anspruch 1, **gekennzeichnet durch** eine in vorgegebenen Zeitintervallen wiederholte Ausführung der folgenden Schritte: schrittweise aufeinanderfolgend den ersten Teilmassenstrom um ein erstes Inkrement zu erhöhen und den Gesamt-Brennstoffmassenstrom während der Veränderung des ersten Teilmassenstroms konstantzuhalten, die Druckschwingungskenngrösse (p'_{BK}) zu bestimmen, die Schritte so lange zu wiederholen bis die Druckschwingungskenngrösse den Grenzwert (H) überschreitet, und beim Überschreiten des Grenzwertes (H) für die Druckschwingungskenngrösse (p'_{BK}) den ersten Teilmassenstrom um ein zweites Inkrement zu vermindern und den Gesamt-Brennstoffmassenstrom während der Veränderung des ersten Teilmassenstroms konstantzuhalten.

3. Verfahren nach Anspruch 1, **gekennzeichnet durch** eine in vorgegebenen Zeitintervallen wiederholte Ausführung der folgenden Schritte: schrittweise aufeinanderfolgend den ersten Teilmassenstrom um ein erstes Inkrement zu erhöhen und den Gesamt-Brennstoffmassenstrom während der Veränderung des ersten Teilmassenstroms konstantzuhalten, die Druckschwingungskenngrösse zu bestimmen, die Schritte so lange zu wiederholen bis die Druckschwingungskenngrösse einen zweiten Grenzwert (L) überschreitet, und den Gesamt-Brennstoffmassenstrom während der Veränderung des ersten Teilmassenstroms konstantzuhalten.

4. Verfahren gemäss einem der vorstehenden Ansprüche, **gekennzeichnet dadurch**, die Brennstoffmassenstrom-Aufteilung zwischen Brennstoffaustrittsöffnungen (241, 242) innerhalb eines Brenners (240) zu verändern.

5. Verfahren gemäss Anspruch 4, **gekennzeichnet dadurch**, den ersten BrennstoffAustrittsöffnungen einen kleineren Brennstoffmassenstrom zuzumessen als den zweiten Brennstoff-Austrittsöffnungen.

6. Verfahren gemäss einem der vorstehenden Ansprüche, **gekennzeichnet dadurch**, die Brennstoffmassenstrom-Aufteilung zwischen wenigstens zwei Brennern oder Brennergruppen (201, 202, 203, 204, 205, 206, 211, 212) zu verändern.

7. Verfahrennach Anspruch 6, **gekennzeichnet dadurch**, den zweiten Brenner oder die zweite Brennergruppe mit einem brennstoffreicheren Brennstoff-Luft-Gemisch zu betreiben als den ersten Brenner oder die erste Brennergruppe.

8. Verfahren gemäss einem der vorstehenden Ansprüche, wobei die Feuerungseinrichtung wenigstens zwei Brennräume (2a, 2b) umfasst, **gekennzeichnet dadurch**, einen der Teilmassenströme einem ersten Brennraum zuleiten und den anderen Teilmassenstrom einem zweiten Brennraum zuzuleiten.

9. Verfahren gemäss einem der vorstehenden Ansprüche, **dadurch gekennzeichnet, dass** der erste Teilmassenstrom mit einer Ein/Aus-Funktion diskontinuierlich gesteuert wird.

10. Verfahren gemäss einem der vorstehenden Ansprüche, weiterhin umfassend, wenigstens einen Teilmassenstrom mittels eines ersten Teilmassenstrom-Stellorgans (100, 101, 102, 103, 104, 105, 106, 110, 130) zuzumessen, und zur Veränderung der Aufteilung des Gesamt-Brennstoffmassenstroms die Stellung des ersten Teilmassenstrom-Stellorgans zu variieren.

11. Verfahren gemäss einem der vorstehenden Ansprüche, weiterhin umfassend, den Gesamt-Brennstoffmassenstrom durch ein Gesamtmassenstrom-Stellorgan (7) zu leiten, wenigstens eine Regelgrösse, insbesondere eine Feuerungstemperatur (T₃) oder einen Brennstoffmassenstrom, unmittelbar zu messen oder auf sonstige geeignete Weise zu bestimmen, und die Stellung des Gesamtmassenstrom-Stellorgans als Stellgrösse zur Regelung der Regelgrösse heranzuziehen.

12. Verfahren gemäss Anspruch 9, weiterhin umfassend, den zweiten Teilmassenstrom durch ein zweites Teilmassenstrom-Stellorgan (120) zu leiten, wenigstens eine Regelgrösse, insbesondere eine Feuerungstemperatur oder einen Brennstoffmassenstrom, unmittelbar zu messen oder auf sonstige geeignete Weise zu bestimmen, und die Stellung des zweiten Teilmassenstrom-Stellorgans als Stellgrösse zur Regelung der Regelgrösse heranzuziehen.

13. Verfahren gemäss einem der vorstehenden Ansprüche, **dadurch gekennzeichnet, dass** die Feuerungseinrichtung als Brennkammer einer Gasturbogruppe betrieben wird.

14. Verfahren gemäss einem der Ansprüche 10 oder 11, wobei die Feuerungseinrichtung als Brennkammer einer Gasturbogruppe betrieben wird, weiterhin umfassend, die elektrische Leistung (P_{ACT}) eines angetriebenen Generators (4) zu messen, und diese Netto-Leistungsabgabe als Regelgrösse heranzuziehen.

15. Verfahren gemäss einem der Ansprüche 10 oder 11, wobei die Feuerungseinrichtung als Brennkammer einer Gasturbogruppe betrieben wird, weiterhin umfassend, die Turbineneintrittstemperatur (T₃) zu bestimmen und als Regelgrösse heranzuziehen.

16. Verfahren gemäss einem der vorstehenden Ansprüche, **gekennzeichnet dadurch**, eine Leistungskenngrösse (P') der Feuerungseinrichtung oder der Gasturbogruppe zu bestimmen, eine Mehrzahl von funktionellen Abhängigkeiten (A, B, C, D, E, F) der Stellung (Y, Y₁₃₀) eines Stellorgans für den ersten Brennstoff-Teilmassenstrom von der Leistungskenngrösse (P') zu definieren, die Stellung des Stellorgans für den ersten Teilmassenstrom gemäss einer ersten funktionellen Abhängigkeit einzustellen, und zur Veränderung des ersten Teilmassenstroms die Stellung des Stellorgans für den ersten Teilmassenstrom gemäss einer zweiten funktionellen Abhängigkeit einzustellen.

## Claims

1. Method for operating a furnace, said method involving metering an overall fuel mass flow to the furnace, metering a first part mass flow of the fuel mass flow to a first group of fuel outlet orifices (241, 243), metering a second part mass flow of the fuel mass flow to a second group of fuel outlet opening (242, 244), measuring pressure oscillations in the furnace, determining at least one pressure oscillation characteristic (p'BK) from the measured pressure oscillations, reducing the first part mass flow when a limit value (H) of the pressure oscillation characteristic is overshot and keeping the overall fuel mass flow constant during the variation in the first part mass flow, and thereby acting on the apportionment of the overall fuel mass flow, **characterized in that**, after a defined time, the first part mass flow is increased again and the overall fuel mass flow is kept constant during the variation in the first part mass flow.

2. Method according to Claim 1, **characterized by** an execution, repeated at predetermined time intervals, of the following steps: increasing the first part mass flow by the amount of a first increment successively in steps and keeping the overall fuel mass flow constant during the variation in the first part mass flow, determining the pressure oscillation characteristic (p'BK), repeating the steps until the pressure oscillation characteristic overshoots the limit value (H), and, when the limit value (H) for the pressure oscillation characteristic (p'BK) is overshot, reducing the first part mass flow by the amount of a second increment and keeping the overall fuel mass flow constant during the variation in the first part mass flow.

3. Method according to Claim 1, **characterized by** an execution, repeated at predetermined time intervals, of the following steps: increasing the first part mass flow by the amount of a first increment successively in steps and keeping the overall fuel mass flow constant during the variation in the first part mass flow, determining the pressure oscillation characteristic, repeating the steps until the pressure oscillation characteristic overshoots a second limit value (L), and keeping the overall fuel mass flow constant during the variation in the first part mass flow.

4. Method according to one of the preceding claims, **characterized in that** the fuel mass flow apportionment between fuel outlet opening (241, 242) within a burner (240) is varied.

5. Method according to Claim 4, **characterized in that** a smaller fuel mass flow is metered to the first fuel outlet opening than to the second fuel outlet opening.

6. Method according to one of the preceding claims, **characterized in that** the fuel mass flow apportionment between at least two burners or burner groups (201, 202, 203, 204, 205, 206, 211, 212) is varied.

7. Method according to Claim 6, **characterized in that** the second burner or the second burner group is operated with a fuel-richer fuel/air mixture than the first burner or the first burner group.

8. Method according to one of the preceding claims, the furnace comprising at least two combustion spaces (2a, 2b), **characterized in that** one of the part mass flows is delivered to a first combustion space and the other part mass flow is delivered to a second combustion space.

9. Method according to one of the preceding claims, **characterized in that** the first part mass flow is controlled discontinuously by means of an on/off function.

10. Method according to one of the preceding claims, furthermore involving metering at least one part mass flow by means of a first part mass flow actuator (100, 101, 102, 103, 104, 105, 106, 110, 130) and changing the position of the first part mass flow actuator in order to vary the apportionment of the overall fuel mass flow.

11. Method according to one of the preceding claims, furthermore involving conducting the overall fuel mass flow through an overall mass flow actuator (7), measuring directly or determining in another suitable way at least one regulation variable, in particular a firing temperature (T₃) or a fuel mass flow, and using the position of the overall mass flow actuator as a manipulated variable for regulating the regulation variable.

12. Method according to Claim 9, furthermore involving conducting the second part mass flow through a second part mass flow actuator (120), measuring directly or determining in another suitable way at least one regulation variable, in particular a firing temperature or a fuel mass flow, and using the position of the second part mass flow actuator as a manipulated variable for regulating the regulation variable.

13. Method according to one of the preceding claims, **characterized in that** the furnace is operated as a combustion chamber of a gas turbo group.

14. Method according to either one of Claims 10 and 11, the furnace being operated as a combustion chamber of a gas turbo group, furthermore involving measuring the electrical power (P_{ACT}) of a driven generator (4) and using this net power output as a regulation variable.

15. Method according to either one of Claims 10 and 11, the furnace being operated as a combustion chamber of a gas turbo group, furthermore involving determining the turbine inlet temperature (T₃) and using it as a regulation variable.

16. Method according to one of the preceding claims, **characterized in that** a power characteristic (P') of the furnace or of the gas turbo group is determined, a plurality of functional dependencies (A,B,C,D,E,F) of the position (Y, Y₁₃₀) of an actuator for the first fuel part mass flow are defined by the power characteristic (P'), the position of the actuator for the first part mass flow is set according to a first functional dependence, and, to vary the first part mass flow, the position of the actuator for the first part mass flow is set according to a second functional dependence.

## Revendications

1. Procédé pour l'exploitation d'un équipement de chauffe, lequel procédé comprenant l'affectation, à l'équipement de chauffe, d'un débit massique global de combustible, l'affectation d'un premier débit massique partiel du débit massique de combustible à un premier groupe d'orifices de sortie de combustible (241, 243), l'affectation d'un deuxième débit massique partiel du débit massique de combustible à un deuxième groupe d'orifices de sortie de combustible (242, 244), la mesure des oscillations de pression dans l'équipement de chauffe, la détermination, à partir des oscillations de pression mesurées, d'au moins un paramètre caractéristique des oscillations de pression (p'_{BK}), la diminution, en cas de dépassement d'une valeur limite (H) du paramètre caractéristique des oscillations de pression, du premier débit massique partiel, et le maintien constant du débit massique total de combustible pendant la modification du premier débit massique partiel, et de cette manière une action sur la répartition du débit massique total de combustible, **caractérisé en ce que**, après un temps prédéfini, le premier débit massique partiel est de nouveau augmenté, et le débit massique total de combustible est maintenu constant pendant la modification du premier débit massique partiel.

2. Procédé selon la revendication 1, **caractérisé par** une mise en oeuvre, répétée à des intervalles de temps prédéfinis, des étapes suivantes : augmentation pas-à-pas successivement d'un premier incrément du premier débit massique partiel, et maintien constant du débit massique total de combustible pendant la modification du premier débit massique partiel, détermination du paramètre caractéristique des oscillations de pression (p'_{BK}), répétition des étapes jusqu'à ce que le paramètre caractéristique des oscillations de pression dépasse la valeur limite (H) et, en cas de dépassement de la valeur limite (H) du paramètre caractéristique des oscillations de pression (p'_{BK}), diminution d'un deuxième incrément du premier débit massique partiel, et maintien constant du débit massique total de combustible pendant la modification du premier débit massique partiel.

3. Procédé selon la revendication 1, **caractérisé par** une mise en oeuvre, répétée à des intervalles de temps prédéfinis, des étapes suivantes : augmentation pas-à-pas successivement d'un premier incrément du premier débit massique partiel et maintien constant du débit massique total de combustible pendant la modification du premier débit massique partiel, détermination du paramètre caractéristique des oscillations de pression, répétition des étapes jusqu'à ce que le paramètre caractéristique des oscillations de pression dépasse une deuxième valeur limite (L), et maintien constant du débit massique total de combustible pendant la modification du premier débit massique partiel.

4. Procédé selon l'une des revendications précédentes, **caractérisé par** la modification de la répartition du débit massique de combustible entre les orifices de sortie du combustible (241, 242) à l'intérieur d'un brûleur (240).

5. Procédé selon la revendication 4, **caractérisé par** l'affectation, aux premiers orifices de sortie du combustible, d'un débit massique de combustible plus petit que celui qui est affecté aux deuxièmes orifices de sortie du combustible.

6. Procédé selon l'une des revendications précédentes, **caractérisé par** la modification de la répartition du débit massique du combustible entre au moins deux brûleurs ou groupes de brûleurs (201, 202, 203, 204, 205, 206, 211, 212).

7. Procédé selon la revendication 6, **caractérisé par** l'exploitation du deuxième brûleur ou du deuxième groupe de brûleurs avec un mélange combustible-air plus riche en combustible que le premier brûleur ou le premier groupe de brûleurs.

8. Procédé selon l'une des revendications précédentes, dans lequel l'équipement de chauffe comprend au moins deux chambres de combustion (2a, 2b), **caractérisé par** l'envoi de l'un des débits massiques partiels à une première chambre de combustion et de l'autre débit massique partiel à une deuxième chambre de combustion.

9. Procédé selon l'une des revendications précédentes, **caractérisé en ce que** le premier débit massique partiel est piloté d'une manière discontinue avec une fonction marche/arrêt.

10. Procédé selon l'une des revendications précédentes, comprenant en outre au moins l'affectation d'un premier débit massique partiel à l'aide d'un premier organe de réglage du débit massique partiel (100, 101, 102, 103, 104, 105, 106, 110, 130), et la modification de la position du premier organe de réglage du débit massique partiel pour faire varier la répartition du débit massique total du combustible.

11. Procédé selon l'une des revendications précédentes, comprenant en outre l'envoi du débit massique total de combustible à travers un organe de réglage (7) du débit massique total, la mesure directe d'au moins une grandeur réglée, en particulier une température de chauffe (T₃) ou un débit massique de combustible, ou sa détermination d'une autre manière appropriée, et l'utilisation de la position de l'organe de réglage du débit massique total en tant que grandeur réglante pour régler la grandeur réglée.

12. Procédé selon la revendication 9, comprenant en outre l'envoi du deuxième débit massique partiel à travers un deuxième organe de réglage (120) du débit massique partiel, la mesure directe d'au moins une grandeur réglée, en particulier une température de chauffe ou un débit massique de combustible, ou sa détermination d'une autre manière appropriée, et l'utilisation de la position du deuxième organe de réglage du débit massique partiel en tant que grandeur réglante pour régler la grandeur réglée.

13. Procédé selon l'une des revendications précédentes, **caractérisé en ce que** l'équipement de chauffe est exploité en tant que chambre de combustion d'un groupe de turbines à gaz.

14. Procédé selon l'une des revendications 10 ou 11, dans lequel l'équipement de chauffe est exploité en tant que chambre de combustion d'un groupe de turbines à gaz, comprenant en outre la mesure de la puissance électrique (P_{ACT}) d'une génératrice (4) entraînée, et l'utilisation de cette puissance absorbée nette en tant que grandeur réglée.

15. Procédé selon l'une des revendications 10 ou 11, dans lequel l'équipement de chauffe est exploité en tant que chambre de combustion d'un groupe de turbines à gaz, comprenant en outre la détermination de la température d'entrée (T₃) des turbines, et son utilisation en tant que grandeur réglée.

16. Procédé selon l'une des revendications précédentes, **caractérisé par** la détermination d'un paramètre caractéristique de puissance (P') de l'équipement de chauffe ou du groupe de turbines à gaz, la définition d'un grand nombre de dépendances fonctionnelles (A, B, C, D, E, F), en fonction du paramètre caractéristique de puissance (P'), de la position (Y, Y₁₃₀) d'un organe de réglage du premier débit massique partiel de combustible, l'ajustement de la position de l'organe de réglage du premier débit massique partiel selon une première dépendance fonctionnelle, et, pour faire varier le premier débit massique partiel, l'ajustement de la position de l'organe de réglage du premier débit massique partiel, selon une deuxième dépendance fonctionnelle.
